# EUROPÄISCHE PATENTANMELDUNG

(11) **EP 4 620 753 A2**
(43) Veröffentlichungstag der Anmeldung: **24.09.2025**
(21) Anmeldenummer: 25195161.2
(22) Anmeldetag: 08.02.2021
(51) Int. Cl.: B60T 8/88

(54) **FAHRDYNAMIKSYSTEM, E-FAHRZEUG MIT ZENTRALER STEUERUNG**

(30) Priorität: 12.02.2020 DE 102020103660
(62) Teilanmeldung aus: 21703927.0
(71) Anmelder: IPGATE AG, 8808 Pfäffikon SZ (CH)
(72) Erfinder: LEIBER, Thomas, 22203 Rogoznica (HR)
(74) Vertreter: Meissner Bolte Partnerschaft mbB

(57) **Zusammenfassung**

Die Erfindung betrifft ein Fahrdynamiksystem für ein Fahrzeug, umfassend:
- eine Primärsteuereinheit (M-ECU) zur Erfassung und/oder Generierung von Lenkbefehlen und Bremsbefehlen;
- ein Bremssystem
mit einem ersten Bremsmodul (BM1), umfassend eine erste elektrohydraulische Druckversorgungseinheit (DV1) und
mit einem zweiten Bremsmodul (BM2), umfassend eine zweite elektrohydraulische Druckversorgungseinheit (DV2);

- vier hydraulisch betätigbare Radbremsen (RB1-RB4), die Rädern (R1- R4) zugeordnet sind;
- elektrisch betätigbare Bremsdruckeinstellventile (EV1-EV4, AV1-AV4, SV1-SV4);
- ein Lenkaktuator (EPS) zur Betätigung mindestens einer Achse;
- mindestens eine Busverbindung zur kommunikativen Verbindung eines Steuergeräts (ECUBM1) des ersten Bremsmoduls (BM1) mit der Primärsteuereinheit (M-ECU);
wobei das erste Bremsmodul (BM1) und das zweite Bremsmodul (BM2) in gesonderten Gehäusen untergebracht sind,

wobei das Fahrdynamiksystem dazu ausgebildet ist,
zur Umsetzung eines Bremsbefehls im Normalbetrieb mindestens die zweite Druckversorgungseinheit (DV2) und zumindest die Bremsdruckeinstellventile (EV1-EV4, AV1-AV4, SV1-SV4) für eine radindividuelle Druckeinstellung und
in einem ersten Fehlerfall mindestens die erste Druckversorgungseinheit (DV1) und zumindest die Bremsdruckeinstellventile (EV1-EV4, AV1-AV4, SV1-SV4) für eine radindividuelle Druckeinstellung anzusteuern,
wobei die Primärsteuereinheit (M-ECU) dazu ausgebildet ist, Steuerbefehle an das Bremssystem zu schicken, die durch das erste Bremsmodul BM1 (Primarfunktion) und das zweite Bremsmodul BM2 (Sekundarfunktion) ausgeführt werden, wobei die Steuerbefehle Angaben über Solldrücke oder Solldruckverläufe umfassen.

## Beschreibung

Die vorliegende Erfindung betrifft ein Fahrdynamiksystem (FDS), ein Fahrzeug mit entsprechendem Fahrdynamiksystem sowie ein Verfahren zur Steuerung eines Fahrzeugs. Vorzugsweise ist das Fahrdynamiksystem und das Verfahren zur Steuerung für E-Fahrzeuge oder Hybridfahrzeuge mit hochautomatisiertem (HAD), vollautomatisiertem (FAD) oder autonomem Fahren (AD) ausgebildet.

### Stand der Technik und Entwicklung der Anforderungen für automatisiertes Fahren

Die Automobilindustrie befindet sich in einem disruptiven Veränderungsprozess. Neben der zunehmenden Marktdurchdringung von Elektrofahrzeugen werden verschiedene Stufen des automatisierten Fahrens durchlaufen, dies sind zunächst: Stufe 3 - Hoch Automatisiertes Fahren - HAD, Stufe 4 - Voll Automatisiertes Fahren - FAD und Stufe 5 - Autonomes Fahren - AD, wobei bei jeder Stufe die Anforderungen an die verwendeten Systeme zur Regelung der Fahrdynamik insbesondere durch Lenkung und Bremse steigen.

Elektrofahrzeuge bzw. Fahrzeuge mit einem stärkerem Bordnetz haben die Entwicklung von elektrischen und elektrohydraulischen Bremssystemen vorangetrieben. Die Ablösung von Vakuumbremskraftverstärkern durch elektrische Bremskraftverstärker (e-BKV) begann 2005 nach ersten Lösungsansätzen (vgl. WO2006111392A1) mit der Markteinführung von sog. 2-Box-Lösungen mit elektrischen Folgebremskraftverstärkern gemäß WO2010069688A1 und DE102009004636B4 und zusätzlicher ESP-Einheit im Jahr 2013, zeitnah gefolgt durch integrierte 1-Box Systeme mit Pedalsimulator DE102013224313A1. Aktuell werden Lösungen für die Stufe 3 (HAD) entwickelt.

Ab Stufe 3 (HAD) ist ein Brake-by-Wire Bremssystem und Steer-by-Wire Lenkungssystem erforderlich. Zudem müssen die Kernfunktionen der Bremse (ABS) und der Lenkung (Lenkbarkeit, Giermomenteingriffe zur Fahrzeugstabilität) erstmalig redundant ausgeführt werden, da beim autonomen Fahrbetrieb nicht der Fahrer für Abbildung der Redundanzfunktion durch Betätigung eines Hauptbremszylinders ausreicht. Neben AD favorisieren E-Fahrzeuge sog. Brake-by-Wire Bremssysteme mit Pedalgefühlsimulator, da nur durch ein entkoppeltes Bremssystem das Potential der Energierückgewinnung beim Bremsen über starke elektrische Antriebsmotoren voll ausgeschöpft werden kann. Hier erreichen elektrische Folgeverstärker ihre Grenzen, da bei einem derartigen System eine starke Rekuperation einen Einfluss auf das Pedalgefühl hat und zudem ein Restreibmoment an der Bremse bewirkt und damit Auswirkungen hat auf den Fahrwiderstand und somit Reichweite von E-Fahrzeugen. Ferner hat der Folgebremskraftverstärker kritische Mängel und ist stark abhängig von Einflussfaktoren wie in ATZ-Artikel 3/19 "Bremskraftverstärker für das automatisierte Fahren" erläutert.

Weiter muss ab Stufe 3 auch erstmalig eine Redundanz der ABS-Funktion bereitgestellt werden. Dies wird bei sog. 2-Box-Systemen mit elektrischem Folgeverstärker und ESP/ABS-Aggregat wie in DE112009005541B3 beschrieben derart realisiert, dass der elektrische Bremskraftverstärker (e-BKV) eine Druckmodulations-Funktion bei Ausfall des ESP-Aggregates übernimmt, um stets eine hohe Fahrzeugverzögerung zu gewährleisten. Daher wurde bereits die automatisierte Stotterbremse (in Fachliteratur auch als rudimentäres ABS bezeichnet) im System gemäß WO2011/098178 entsprechend diverser Publikationen des Anmelders umgesetzt. Die automatisierte Stotterbremse führt zu ausreichenden Bremswegen (ca. 200% des Bremsweges bei ABS im Vergleich zu einem vollwertigen radindividuellen ABS) und akzeptabler Stabilität durch Aufrechterhalten der Lenkbarkeit. Wird bei dieser Notfunktion jedoch das Pedal durch den Fahrer betätigt, kann dies zum Blockieren der Räder führen, da durch die Betätigung über das Bremspedal direkt auf den Kolben des Hauptbremszylinders einwirkt, der bei der Stotterbremsfunktion gemäß DE112009005541B3 vor und zurück bewegt wird und unter Einfluss eines Bremspedals sein kann.

Bei Lenkungssystemen wird ebenfalls eine Redundanz gefordert für autonomes Fahren ab Stufe 3 wird Steer-by-Wire umgesetzt. In US 10501111 sowie WO 2017/198549 sind beispielsweise mehrere elektrische Aktuatoren für die Lenkung von zwei Rädern einer Fahrzeugachse vorgesehen, wobei bei Ausfall eines Aktuators der zweite Aktuator die Lenkungsfunktion übernimmt und das Lenkungsmoment auf den anderen Aktuator übertragen wird. So erfolgt beispielsweise in WO 2017/198549 die Kraftübertragung des ersten Aktuators auf den zweiten Aktuator über eine schaltbare Kupplung.

Ab Stufe 4 (FAD) werden für ausreichende Systemverfügbarkeit 3-fach Redundanzen erwartet, z. B. bei den Pedalsensoren mit der Regel "2 aus 3". Zudem ist ein Pedalsimulator wegen zunehmender Rekuperationsleistung von Elektrofahrzeugen und fehlender Akzeptanz der Veränderung der Pedalcharakteristik zwingend, weil vollautomatisches Fahren (FAD) über eine längere Zeitdauer betrieben werden kann und der Fahrer bei Übergang auf pilotiertes Fahren nicht auf eine Veränderung der Pedalcharakteristik vorbereitet ist. Weiter wird eine redundante ABS-Funktion mit bremskreisindividueller oder radindividueller Regelung gefordert. Zudem steigen die Anforderungen an Fahrzeugstabilität, Lenkbarkeit und kurze Bremswege auch bei Teilausfall, z. B. müssen auch bei nichthomogener Fahrbahn und unterschiedlichen Reibwerten für die Fahrzeugräder (z. B. µ-Split) gleichzeitig kurze Bremswege erreicht werden und sichergestellt werden, dass das Fahrzeug noch lenkbar ist und die Seitenführung nicht verloren geht, d. h. das Fahrzeug ins Schleudern gerät. Daher kommt der Redundanz der Giermomenteingriffe bei Bremssystemen eine zunehmende Bedeutung zu. Zudem spielt daher die Redundanz bei Bremssystemen sowie Lenkungssystemen eine große Rolle.

In Stufe 5 (AD) fällt das Lenkrad, Bremse und Gaspedal ggf. komplett weg und das Fahrzeug wird ausschließlich über einen zentralen Rechner gesteuert. Da der Fahrer bei Ausfall von Systemen nicht mehr über ein Bremspedal bzw. durch ein Lenkrad eingreifen kann, wird eine fehlersichere 2-Fach-Redundanz bzw. 3-Fach-Redundanz aller Kernfunktionen der Bremse (Bremskraftverstärkung, ABS) und Lenkung gefordert.

Fahrzeughersteller arbeiten an komplett autonom fahrenden Fahrzeugen ohne Fahrer, die in der ersten Ausbaustufe ein Bremspedal mit einem Pedalgefühlsimulator aufweisen (Stufe 4 FAD) und in der letzten Ausbaustufe (Stufe 5 AD) kein Bremspedal und Gaspedal mehr haben sollen. Zudem wird die Domänenstruktur eingeführt mit Steuergeräten/Domänen für den autonomen und pilotierten Fahrbetrieb. So wird erforderlich, dass sowohl beim autonomen als auch beim pilotierten Fahren ein Zugriff der Domänen bzw. Steuergeräte auf Lenkung und Bremse ermöglicht wird. Zudem setzen sich Fahrzeuge mit starken elektrischen Antriebsmotoren, sowohl an der Hinterachse als auch an der Vorderachse, zunehmend durch. Die Möglichkeit, mit den Elektromotoren im Generatorbetrieb Energie rückzugewinnen, sollte daher sinnvollerweise maximal ausgeschöpft werden. Zudem sollte eine reibungsfreie Bremse realisiert werden, um die Reichweite von E-Fahrzeugen zu maximieren.

Als Alternative zu elektrohydraulischen Bremssystemen gibt es die elektromechanische Bremse (EMB, elektromechanische Keilbremse) als bekannten Lösungsansatz. Die EMB hat sich in der Vergangenheit aufgrund von Sicherheitsbedenken und hohen Kosten nicht durchgesetzt. Bremssysteme für die Stufen FAD und AD können aus Kosten- und Zuverlässigkeitsgründen nicht ausschließlich EMB aufweisen, da eine Redundanz für einen redundanten radindividuellen Bremsmomenteingriff sehr schwer darstellbar ist. Eine EMB ist daher nur für die Hinterachse eines Fahrzeuges geeignet, weil die Hinterachse geringeren Anteil an der Bremskraft hat und ein Ausfall nicht so kritisch betrachtet wird wie an der Vorderachse.

In DE102005055751B4 und DE102005018649B4 ist die hochpräzise Kolbendruckregelung (PPC = Piston Pressure Control) mittels einer elektrisch angetriebenen Kolben-Zylinder-Einheit mit Spindeltrieb erstmalig erläutert. Eine über einen Elektromotor angetriebene Kolben-Zylinder-Einheit mit einer Sensorik zur Messung von Kolbenposition und Motorstrom ermöglicht eine Druckregelung, respektive Bremsmomentsteuerung an den hydraulischen Radbremsen, die in der Präzision durchaus mit einer elektromechanischen Bremse vergleichbar ist und sich daher als Basis zukünftiger Bremssysteme durchgesetzt hat.

Eine gesamtheitliche Optimierung der Fahrdynamiksteuerung durch Nutzung von Synergien von Lenkung, Bremse und Elektromotoren wurde im Stand der Technik noch nicht hinreichend betrachtet, da Brake-by-Wire Bremse und Steer-by-Wire Lenkung als separate Disziplinen betrachtet wurden. Zudem gibt es nur aufwändige Bremssysteme gemäß Stand der Technik, (WO2012143311A1, WO 2018/130481, DE102016211982) welche die Redundanzanforderungen für HAD erfüllen, aber noch nicht für FAD/AD geeignet sind. Kerndefizit der Systeme ist prinzipbedingt die fehlende Redundanz der radindividuellen Druckregelung für eine vollwertige redundante 4-Kanal-ABS-Funktion sowie die Möglichkeit gezielt Giermomente zu erzeugen. Zudem werden die Möglichkeiten der Regelung der 2. Druckversorgung bei Ausfall der Pumpe nicht ausgenutzt.

### Aufgabe der Erfindung

Aufgabe der vorliegenden Erfindung ist es, ein verbessertes Fahrdynamiksystem, Fahrzeug mit entsprechendem Fahrdynamiksystem und Verfahren zur Steuerung eines Fahrzeugs anzugeben.

Weiterhin soll eine Architektur für ein Elektro- bzw. Hybridfahrzeug z. B. mit Range-Extender-Elektromotor, bereitgestellt werden, die für die Anforderungen der hohen Verfügbarkeit beim vollautomatisierten Fahren (FAD) und beim autonomen Fahren (AD) geeignet ist. Insbesondere soll das Fahrdynamiksystem mit minimalem Aufwand realisiert werden.

### Lösung der Aufgabe

Die Aufgabe der Erfindung wird unter anderem durch ein Fahrdynamiksystem gemäß Anspruch 1 gelöst. Vorteilhafte Ausgestaltungen ergeben sich anhand der Unteransprüche.

Insbesondere wird die Aufgabe durch ein Fahrdynamiksystem für ein Fahrzeug gelöst, das umfasst:
- eine Primärsteuereinheit zur Erfassung und/oder Generierung von Lenkbefehlen und Bremsbefehlen;
- ein Bremssystem mit einer ersten elektrohydraulischen Druckversorgungseinrichtung und einer zweiten elektrohydraulischen Druckversorgungseinrichtung,
- vier hydraulisch betätigbare Radbremsen, die Rädern zugeordnet sind;
- elektrisch betätigbare Bremsdruckeinstellventile,
- ein insbesondere elektrischer Lenkaktuator zur Betätigung mindestens einer Achse,

wobei das Fahrdynamiksystem dazu ausgebildet ist,
zur Umsetzung mindestens eines Lenkbefehls, insbesondere im Normalbetrieb, mindestens eine der Druckversorgungseinrichtungen und den Lenkaktuator und/oder
zur Umsetzung eines Bremsbefehls im Normalbetrieb mindestens die zweite Druckversorgungseinrichtung und zumindest die Bremsdruckeinstellventile für eine radindividuelle Druckeinstellung und in einem (ersten) Fehlerfall mindestens die erste Druckversorgungseinrichtung und zumindest die
Bremsdruckeinstellventile für eine radindividuelle Druckeinstellung anzusteuern.

Ein Aspekt der Erfindung besteht darin, dass die Funktion des elektronischen Lenkaktuators durch mindestens eine Druckversorgungseinrichtung, insbesondere eines Bremsmoduls, unterstützt wird. Das heißt, dass unter Verwendung der Druckversorgungseinrichtung ein Giermomenteingriff erfolgt, der das Lenkverhalten des Fahrzeugs verbessert, und somit zu einer effizienteren und sichereren Umsetzung der Lenkbefehle führt. Zusätzlich oder alternativ besteht ein Aspekt der vorliegenden Erfindung darin, dass Bremsbefehle, die im Normalbetrieb (allein) von der ersten Druckversorgungseinrichtung umgesetzt werden, in einem Fehlerfall unter Zuhilfenahme der zweiten Druckversorgungseinrichtung implementiert werden. Hierbei erfolgt vorzugsweise eine radindividuelle Druckeinstellung, die beispielsweise unter Zuhilfenahme der Bremsdruckeinstellventile erfolgen kann. Der Druck kann also im Fehlerfall durch die erste Druckversorgungseinrichtung bereitgestellt werden, wobei die radindividuelle Druckeinstellung durch die Bremsdruckeinstellventile gewährleistet wird.

In einer Ausführungsform gibt ein Lenkbefehl eine Richtung und/oder eine Richtungsänderung vor. Ein Bremsbefehl kann so definiert sein, dass er den grundsätzlichen Wunsch zum Bremsen angibt. Alternativ können Bremsdruckwerte oder andere Werte, die einen gewünschten Grad der Verzögerung des Fahrzeugs inklusive der ABS-Regelfunktion zur maximalen Verzögerung bei inhomogenen Fahrbedingungen (z. B. µ-Split, µ-Sprung) beim gleichzeitigen Aufrechterhalten der Lenkbarkeit sowie ESP-Giermomenteingriffe zur Stabilisierung eines Fahrzeuges, insbesondere im Fahrsituationen, wo das Fahrzeug seine Seitenführung verliert angeben, unter einem Bremsbefehl verstanden werden.

Die Druckversorgungseinrichtungen können Teile von Bremsmodulen sein. In einer Ausführungsform ist die erste Druckversorgungseinrichtung ein Teil des ersten Bremsmoduls und die zweite Druckversorgungseinrichtung ein Teil des zweiten Bremsmoduls. Die jeweiligen Bremsmodule können in gesonderten Gehäusen oder in einem gemeinsamen Gehäuse oder Bauteil angeordnet sein.

In einer Ausführungsform umfasst das erste Bremsmodul ein erstes Bremsmodul-Steuergerät insbesondere zur Steuerung der ersten Druckversorgungseinrichtung sowie das zweite Bremsmodul ein zweites Bremsmodul-Steuergerät zur Steuerung der zweiten Druckversorgungseinrichtung. Erfindungsgemäß kann auch ein weiteres übergeordnetes Steuergerät vorgesehen sein, das die Aktivitäten des ersten Bremsmodul-Steuergerätes und/oder des zweiten Bremsmodul-Steuergeräts koordiniert. Weiterhin können einige oder alle der besagten Steuergeräte zur Steuerung der ersten und/oder zweiten Druckversorgungseinrichtung in einer Recheneinheit zusammengefasst sein, die vorzugsweise einen redundanten und/oder ausfallsicheren Betrieb ermöglicht.

Der Lenkaktuator ist zur Betätigung mindestens einer Achse, vorzugsweise einer Vorderachse ausgebildet. Die jeweilige Achse kann über zwei Räder verfügen, die dann mittels des Lenkaktuators in eine bestimmte Richtung gesteuert werden.

Ein Vorteil der Erfindung besteht darin, dass ein effizientes Fahrdynamiksystem bereitgestellt wird, bei dem Fehlerfälle durch redundante Hardware und/oder Software ausgeglichen bzw. adressiert werden.

In einer Ausführungsform umfasst das Fahrdynamiksystem mindestens eine Detektionseinheit zur Detektion mindestens eines Fehlerfalls. Bei dem Fehlerfall kann es sich um den bereits erwähnten ersten Fehlerfall handeln. Die Detektionseinheit kann ein Softwaremodul oder dezidierte Hardware sein. In einer Ausführungsform ist die Detektionseinheit als ein Teil der bereits beschriebenen Steuergeräte implementiert. Die Detektionseinheit kann dazu ausgebildet sein, einen zumindest teilweisen Ausfall des zweiten Bremsmoduls, insbesondere der zweiten Druckversorgungseinrichtung, und/oder des Lenkaktuators zu detektieren. Vorzugsweise ist das Fahrdynamiksystem dazu ausgebildet, in dem besagten ersten Fehlerfall Maßnahmen zur Bereitstellung eines Drehmomenteingriffs und/oder einer Lenkunterstützung mittels der ersten Druckversorgungseinrichtung zu gewährleisten. Hierbei kann unter Verwendung der ersten Druckversorgungseinrichtung in mindestens einer Radbremse ein Druck aufgebaut werden und somit ein radindividuelles Bremsmoment, insbesondere Giermoment erzeugt werden. Das erfindungsgemäße Fahrdynamiksystem kann somit auch beim Ausfall des zweiten Bremsmoduls, das ggf. für die radindividuelle Bremsdruckregelung zuständig ist, Drehmomenteingriffe und/oder Lenkunterstützung bereitstellen.

Die Detektionseinheit kann zusätzlich oder alternativ zur Detektion eines zweiten Fehlerfalls ausgebildet sein. Bei dem zweiten Fehlerfall kann es sich um einen zumindest teilweisen Ausfall des Lenkaktuators handeln. In diesem Fehlerfall kann ein Lenkbefehl unter Verwendung der zweiten Druckversorgungseinrichtung, insbesondere durch ein Aufbauen eines Drucks in einer Auswahl von Radbremsen umgesetzt werden. In einer Ausführungsform werden Radbremsen auf einer Seite des Fahrzeugs aktiviert. Somit kann auch bei einem vollständigen Ausfall des Lenkaktuators zumindest bei geringen Geschwindigkeiten noch mittels der zweiten Druckversorgungseinrichtung gelenkt werden.

Das erste Bremsmodul mit der ersten Druckversorgungseinrichtung kann dazu eingerichtet sein, zumindest einen ersten Bremskreis über einen ersten Anschlusspunkt und zumindest einen zweiten Bremskreis über einen zweiten Anschlusspunkt mit einem Druckmittel zu beaufschlagen. Somit kann das erste Bremsmodul dazu ausgebildet sein, bremskreisindividuell Druck aufzubauen.

In der Ausführungsform kann ein erstes Trennventil des ersten Bremsmoduls in einer Hydraulikleitung zwischen der ersten Druckversorgungseinrichtung des ersten Bremsmoduls und dem ersten Anschlusspunkt angeordnet sein und ein zweites Trennventil in einer zweiten Hydraulikleitung zwischen der ersten Druckversorgungseinrichtung und dem zweiten Anschlusspunkt angeordnet sein. Die Trennventile ermöglichen es somit ggf. auch in Fehlerfällen innerhalb des ersten Bremsmoduls an den einzelnen Anschlusspunkten unterschiedliche Drücke bereitzustellen. Das Bremssystem kann in diesem Zusammenhang dazu ausgebildet sein, einen dritten Fehlerfall, insbesondere einen Totalausfall des zweiten Bremsmoduls mit der zweiten Druckversorgungseinrichtung zu detektieren und in diesem dritten Fehlerfall, die erste Druckversorgungseinrichtung und das zweite Trennventil zu steuern, um zumindest eine bremskreisindividuelle Druckregelung in den zumindest zwei Bremskreisen zu implementieren. Somit kann selbst in einer Situation, in der ein radindividuelles Einstellen von Drücken nicht mehr gewährleistet wird, abhängig von der Bremskreisverteilung ein effizienter Bremseingriff gewährleistet werden. In dieser Konstellation kann beispielsweise ein 2-Kanal-ABS implementiert werden.

In einer (anderen) Ausführungsform können die Druckversorgungseinheiten nicht seriell, sondern im Wesentlichen parallel zueinander an die Bremskreise angeschlossen sein. So ist in einer Ausführungsform die zweite Druckversorgungseinheit über mindestens eine erste Hydraulikleitung an einem ersten Bremskreis und die erste Druckversorgungseinheit über mindestens eine zweite Hydraulikleitung an einem zweiten Bremskreis angeschlossen. In dieser Konstellation kann ein Trennventil vorgesehen sein, das die erste und die zweite Hydraulikleitung hydraulisch verbindet und ggf. zum hydraulischen Entkoppeln bzw. Trennen dienen kann. Mittels dieses Trennventils und der besagten Anordnung ist es möglich, ausgefallene Bremskreise und/oder Radbremsen derart hydraulisch abzukoppeln, dass mit den verbleibenden Radbremsen bzw. mit dem verbleibenden Bremskreis eine effektive Bremsung gewährleistet werden kann. Somit lässt sich die Sicherheit weiter erhöhen.

Bei der besagten Ausführungsform kann die erste und die zweite Hydraulikleitung über mindestens ein erstes und mindestens ein zweites Trennventil miteinander hydraulisch verbunden sein. Auch in dieser Konstellation lassen sich die Trennventile schließen, um die Verbindung zumindest teilweise zu trennen. In einem Hydraulikleitungsabschnitt zwischen dem ersten und dem zweiten Trennventil kann ein (zentrales) Auslassventil für den Druckabbau vorgesehen sein. Vorzugsweise ist dieses zentrale Auslassventil über eine Fluidverbindung mit einem Reservoir verbunden. Die beiden Trennventile ermöglichen es in Verbindung mit dem Auslassventil, bremskreisindividuell den Druck abzubauen. Weiterhin kann auch bei einem Ausfall einer der beiden Bremskreise im jeweils anderen Bremskreis kontrolliert Druck abgebaut und ggf. unter Verwendung der Druckversorgungseinheiten wiederaufgebaut werden. Somit lassen sich auch bei einem Teilausfall ABS-Funktionen und/oder Giermomenteingriffe implementieren.

Alternativ oder zusätzlich kann ein (radindividueller oder bremskreisselektiver) Druckabbau über eine der Druckversorgungseinheiten erfolgen. Dies ermöglicht es, den Druckabbau, beispielsweise durch eine Ermittlung des Kolbenhubs, zu quantifizieren. Ggf. kann auf das Vorsehen oder Verwenden von Drucksensoren verzichtet werden.

Die vorhergehend beschriebene Ausführungsform, aber auch die anderen Ausführungsformen können bidirektionale Bremsdruckeinstellventile für einen Druckaufbau und einen Druckabbau umfassen. Vorzugsweise sind jeder Radbremse (genau) ein Bremsdruckeinstellventil zugeordnet, um in der jeweiligen Radbremse Druck auf- und abzubauen.

Das Verwenden von bidirektionalen Ventilen ermöglicht es, die Anzahl der notwendigen Ventile zu reduzieren, gleichzeitig wird ein einfacheres und ausfallsicheres System geschaffen. So sind beispielsweise einzelnen Radbremsen bei Druck einer Hydraulikleitung zur Radbremse durch Schließen der bidirektionalen Einlassventile absperrbar und der Druckregelbetrieb kann noch in den verbleibenden 3 Radbremsen aufrechterhalten werden.

### Insbesondere in Verbindung mit der Parallelschaltung der

Druckversorgungseinrichtungen kann das Verwenden einer Einkreis-Pumpe als zweite Druckversorgungseinrichtung von Vorteil sein. Diese kann hydraulisch mit dem Reservoir verbunden sein, um Druckmittel in den ersten und/oder zweiten Bremskreis zu fördern.

Die Detektionseinrichtung kann zur Detektion eines vierten Fehlerfalls, insbesondere des Ausfalls eines Bremskreises und/oder eines fünften Fehlerfalls, insbesondere des Ausfalls einer Radbremse ausgebildet sein. Das Fahrdynamiksystem kann dazu ausgebildet sein, in Reaktion auf die Detektion des vierten und/oder des fünften Fehlerfalls mindestens eines der Trennventile und/oder mindestens eines der Bremsdruckeinstellventile zu schließen, um den ausgefallenen Bremskreis und/oder die ausgefallene Radbremse hydraulisch abzukuppeln bzw. abzutrennen. Vorzugsweise ist das Fahrdynamiksystem also dazu geeignet, in der bereits geschilderten Form einen Bremskreis und/oder eine Auswahl von Radbremsen so hydraulisch abzutrennen, dass ein Defekt in den entsprechenden Bereichen keinen Einfluss auf das restliche System hat.

In einer Ausführungsform sind elektromotorische Antriebe im Fahrdynamiksystem so ausgebildet, dass sie auch bei einem Ausfall einiger Wicklungen (z. B. Motor mit zwei Dreiphasensträngen und Ausfall einen Dreiphasenstranges, Betrieb mit nur einem Dreiphasenstrang) noch betrieben werden können. Diesbezüglich bieten sich der Lenkaktuator, die erste Druckversorgungseinrichtung und/oder die zweite Druckversorgungseinrichtung an. So kann der Lenkaktuator mindestens einen elektromotorischen Antrieb mit redundanten Wicklungen und redundanter Steuerung umfassen, sodass bei einem Ausfall die Funktionalität des Lenkaktuators zumindest teilweise mittels der redundanten Wicklungen und/oder Steuerung aufrechterhaltbar ist. Bei der Wicklung kann es sich um eine redundante 3-Phasen-Wicklung handeln.

Dementsprechend kann die erste und/oder zweite Druckversorgungseinrichtung jeweils mindestens einen elektromotorischen Antrieb mit redundanten Wicklungen und redundanter Steuerung umfassen, sodass bei einem Ausfall ein Druckabbau und/oder Druckaufbau in den Radbremsen bzw. Bremskreisen zumindest teilweise mittels der redundanten Wicklungen und Steuerung umsetzbar ist. Diese Form der Redundanz erhöht die Sicherheit des Fahrdynamiksystems weiter.

Das Fahrdynamiksystem kann dazu ausgebildet sein, die Radbremsen zur Stillstandsbremsung mittels der ersten Druckversorgungseinrichtung und/oder zweiten Druckversorgungseinrichtung mit Druck zu beaufschlagen und/oder mindestens einen Fahrzeugelektromotor für die Stillstandsbremsung anzusteuern. Bei herkömmlichen Systemen werden häufig zusätzliche Komponenten genutzt, um eine entsprechende Stillstandsbremsung zu implementieren, z. B. mittels einer mechanischen und elektrischen Parkbremse (EPB). Die vorliegende Erfindung schlägt vor, die Stillstandsbremsung hydraulisch und/oder über den mindestens einen Fahrzeugelektromotor, der üblicherweise zum Antrieb des Fahrzeugs gedacht ist, zu implementieren. Somit kann auf weitere Komponenten zur Bereitstellung der Stillstandsbremsung, insbesondere der EPB, verzichtet werden. In einer Ausführungsform kooperieren die erste Druckversorgungseinrichtung und/oder die zweite Druckversorgungseinrichtung und/oder der mindestens eine Fahrzeugelektromotor, um eine entsprechende Stillstandsbremsung bereitzustellen.

In einer Ausführungsform kann ein sechster Fehlerfall detektiert werden.

Dieser sechste Fehlerfall kann ein zumindest teilweises Ausfallen der ersten Druckversorgungseinrichtung oder der zweiten Druckversorgungseinrichtung sein, wobei das Fahrdynamiksystem dazu ausgebildet ist, die jeweils andere Druckversorgungseinrichtung und/oder mindestens einen der Fahrzeugelektromotoren zu aktivieren, um die Stillstandsbremsung zu implementieren. Insofern werden mit dem erfindungsgemäßen Fahrdynamiksystem auch hinsichtlich der Stillstandsbremsung Redundanzen geschaffen, die bei einem Ausfall eine sichere Funktion gewährleisten. Die Detektion des sechsten Fehlerfalls kann wiederum mittels der Detektionseinrichtung erfolgen.

Nach dem Aufbau eines entsprechenden Druckes in den Radbremsen mittels der ersten und/oder zweiten Druckversorgungseinrichtung kann der Druck über Ventile, beispielsweise über die Bremsdruckeinstellventile gehalten werden. Eine Bestromung der Druckversorgungseinrichtung ist in diesem Zustand nicht notwendig, sodass Energie eingespart werden kann.

Die Stillstandsbremse ist im Normalfall ohne Fehler an allen 4 Radbremsen einsetzbar. Bei Aktuierung der Stillstandsbremse wird entweder eine Achse mit einem Elektromotor über Drehmomenterzeugung gehalten oder es werden an mehreren Radbremsen über die Druckversorgung Drücke aufgebaut und der Druck in den Radbremsen wird vorzugsweise durch Schließen von bidirektional wirksamen Raddruckregelventilen (SV) aufrechterhalten und regelmäßig mit der Druckversorgung diagnostiziert. Fällt z. B. die hydraulische Leitung zu einer Radbremse, z. B. durch Leitungsbruch der hydraulischen Leitung, aus, kann durch Schließen des Raddruckregelventils der Verbraucher abgetrennt werden und noch in den verbleibenden Radbremsen ein Druck erzeugt werden. So ist auch bei Ausfall von zwei hydraulischen Leitungen zur Radbremse noch eine Stillstandsfunktion möglich wie bei einer klassischen EPB, die nur auf zwei Räder einer Achse wirkt, d.h. auch bei Ausfall von zwei Hydraulikleitungen ist die gleiche Stillstandsfunktion wie bei einer EPB erreichbar. Diese Redundanz ermöglicht einen Verzicht auf die mechanische Parkbremse oder EPB, wenn entsprechende Lösungen für den unwahrscheinlichen kompletten Ausfall einer Energiequelle gesorgt werden, z. B. ein kleine Stützbatterie für den kompletten Bordnetzausfall.

Bei einer Detektion eines zumindest teilweisen Ausfalls der zweiten Druckversorgungseinheit (vgl. beispielsweise erster Fehlerfall) kann das Fahrdynamiksystem wie bereits erläutert dazu eingerichtet sein, eine ABS-Funktion und/oder einen Giermomenteingriff bereitzustellen, wobei ein (radindividuelles und/oder selektives) Einstellen der Drücke in den Radbremsen oder eine Ansteuerung mindestens eines der Bremsdruckeinstellventile des zweiten Bremsmoduls und/oder eines Trennventils des zweiten Bremsmoduls und der ersten Druckversorgungseinheit erfolgt. Wie bereits erläutert, kann in diesem Fehlerfall der Druck durch die erste Druckversorgungseinheit erzeugt werden, wobei zumindest einige der Ventile aus dem zweiten Bremsmodul genutzt werden, um die Drücke radindividuell oder selektiv einzustellen.

Somit wird durch sehr einfache Maßnahmen, beispielsweise das Bereitstellen eines entsprechenden Interfaces für den Zugriff auf die jeweiligen Aktuatoren, die Sicherheit deutlich erhöht.

Zwischen den Steuergeräten, insbesondere der Bremsmodule, können kommunikative Verbindungen, insbesondere Busverbindungen bestehen, wobei das erste Steuergerät vorzugsweise dazu ausgebildet ist, Druckmesswerte der zweiten Druckversorgungseinheit und/oder Raddrehzahlsignale über die kommunikative Verbindung zu empfangen.

Das Fahrdynamiksystem kann mindestens eine (kabelgebundene) Busverbindung zur kommunikativen Verbindung des ersten Bremsmoduls, insbesondere eines Steuergeräts des ersten Bremsmoduls, und/oder des Lenkaktuators, insbesondere eines Steuergeräts des Lenkaktuators, mit der Primärsteuereinheit umfassen. Die Busverbindung kann redundant ausgebildet sein, sodass beim Ausfall einer der Verbindungen eine redundante Verbindung zur Verfügung steht. Bei der Redundanz kann es sich um eine heiße oder um eine kalte Redundanz handeln.

Zusätzlich oder alternativ können Sendeempfangseinheiten zur drahtlosen Kommunikationsverbindung des ersten Bremsmoduls, insbesondere des Steuergeräts des ersten Bremsmoduls, und/oder des Lenkaktuators, insbesondere des Steuergeräts des Lenkaktuators, mit der Primärsteuereinheit vorgesehen sein. Das Verwenden von drahtlosen Kommunikationsverbindungen hat viele Vorteile, da sich die Herstellung des Systems stark vereinfacht. Insbesondere zur Herstellung der notwendigen Redundanzen können drahtlose Kommunikationsverbindungen vorteilhaft sein.

Die eingangs genannte Aufgabe kann weiterhin durch ein Fahrzeug umfassend eines der Fahrdynamiksysteme wie diese bereits vorab erläutert wurden, gelöst werden. Es ergeben sich ähnliche Vorteile, wie diese in Verbindung mit den einzelnen Fahrdynamiksystemen beschrieben wurden.

Das Fahrzeug kann umfassen:
- eine Vorderachse;
- eine Hinterachse, wobei Räder an der Vorderachse und/oder an der Hinterachse über die Radbremse abbremsbar sind.

In einer Ausführungsform ist mindestens ein Fahrzeugelektromotor zum Antreiben der Vorderachse und/oder der Hinterachse vorgesehen, wobei die Primärsteuereinheit drahtlos und/oder drahtgebunden kommunikativ mit dem Fahrzeugelektromotor verbunden ist, um diesen zumindest zur Erzeugung eines Bremsmoments anzusteuern. Zusätzlich können Messsignale von dem Fahrzeugelektromotor empfangen werden, um das Verhalten der Bremsmodule auf den Fahrzeugelektromotor abzustimmen. In einer Ausführungsform ist ein Fahrzeugelektromotor an der Hinter- oder Vorderachse angeordnet. Es sind aber auch Ausführungsformen denkbar, bei denen mehrere Fahrzeugelektromotoren, beispielsweise einer pro Achse, vorgesehen sind.

Durch das Ansteuern des Fahrzeugelektromotors lässt sich ein Bremsmoment erzielen, bei dem die aufgebrachte Energie zumindest teilweise rückgewonnen wird. Weiterhin kann der Fahrzeugelektromotor gezielt angesteuert werden, um Redundanzen zu den bereits beschriebenen Bremsmodulen herzustellen. Je nach Anzahl der verwendeten Fahrzeugmotoren ist es sogar möglich, radindividuelle Bremsmomente bereitzustellen und beispielsweise einen Giermomenteingriff zu implementieren.

In einer Ausführungsform können an mindestens zwei Radbremsen elastische Elemente für eine Belagrückführung der Radbremsen vorgesehen sein, wobei das jeweilige elastische Element so wirkt, dass sich ein Lüftspiel in der jeweiligen Radbremse einstellt. Somit lässt sich der Reibwiderstand im ungebremsten Zustand deutlich reduzieren, was zu einem geringeren Energieverbrauch beim Fortbewegen des Fahrzeugs führt. Die Primärsteuereinheit kann bei einem Bremsvorgang mindestens eine der Druckversorgungseinrichtungen zur Überwindung des Lüftspiels ansteuern, sodass die Überwindung des Lüftspiels beispielsweise vom Fahrer nicht wahrnehmbar ist. Alternativ oder zusätzlich kann die Primärsteuerung bei einem Bremsvorgang den Fahrzeugelektromotor zur Erzeugung eines Bremsmoments während der Überwindung des Lüftspiels ansteuern. Die Fahrzeugelektromotoren können also dazu genutzt werden, um die fehlende Bremswirkung beim Überwinden des Lüftspiels bereitzustellen.

Die eingangs genannte Aufgabe wird weiterhin durch ein Verfahren zur Steuerung eines Fahrzeugs gelöst. Das Fahrzeug kann ein Fahrdynamiksystem aufweisen, wie dieses bereits in verschiedenen Ausführungsformen vorhergehend erläutert wurde. Das Verfahren kann die nachfolgenden Schritte umfassen:
- Ausgeben eines Steuerbefehls, umfassend einen Lenk- und/oder einen Bremsbefehl, durch eine (Master-)Primärsteuereinheit;
- Empfangen des Steuerbefehls durch mindestens ein (Slave-)Steuergerät eines Bremsmoduls, insbesondere eines ersten oder zweiten Bremsmoduls;
- Überwachen der Fahrzeugsituation durch eine Detektionseinheit;
- Ausführen des Steuerbefehls durch mindestens einen Aktuator, wenn die Detektionseinheit angibt, dass sich das Fahrzeug in einer Normalsituation befindet; oder
- Ausführen eines zumindest teilweise modifizierten Steuerbefehls, insbesondere eines ABS/ESP- oder Giermomenteingriffes zum stabilen Abbremsen des Fahrzeuges mit maximaler Verzögerung durch das (Slave-)Steuergerät, wenn die Detektionseinheit angibt, dass sich das Fahrzeug in einer Risikosituation befindet.

Auch hinsichtlich des Verfahrens ergeben sich ähnliche Vorteile, wie diese bereits in Verbindung mit der Vorrichtung erläutert wurden.

Ein Aspekt dieser Ausführungsform besteht darin, dass für die Implementierung einer effizienteren Steuerstrategie die Primärsteuereinheit grundsätzlich Steuerbefehle abgeben kann, die von einem oder mehreren Bremsmodulen implementiert bzw. umgesetzt werden. Hierzu betätigen die Bremsmodule die ihnen zugeordneten Aktuatoren. Gleichzeitig erfolgt jedoch eine Überwachung der Fahrzeugsituation. Soweit festgestellt wird, dass sich das Fahrzeug in einer kritischen Situation befindet, können die Steuerbefehle modifiziert werden.

Dies umfasst auch, dass ein bestimmter Steuerbefehl überhaupt nicht ausgeführt wird. Somit kann in den besagten Risikosituationen eine Steuerung der Module vermieden werden, die das Fahrzeug und/oder die Insassen des Fahrzeuges gefährdet. Bekannte Sicherheits- und Komfortfunktionen können derart bereitgestellt werden, dass sie nicht ohne weiteres von der Primärsteuereinheit ausgehebelt werden können.

Die Detektionseinheit kann ein drohendes Blockieren von mindestens einem Rad und/oder ein drohendes Ausbrechen des Fahrzeugs bei einem Lenkversuch und/oder ein drohendes Durchdrehen mindestens eines Rades als Risikosituation erkennen.

Die eingangs genannte Aufgabe wird weiterhin durch ein computerlesbares Medium, umfassend Instruktionen zur Durchführung des besagten Verfahrens, gelöst. Vorzugsweise bedarf dies der Ausführung der Instruktionen auf mindestens einer Recheneinheit.

Nachfolgend wird die Erfindung mittels mehrerer Ausführungsbeispiele beschrieben, die anhand von Abbildungen näher erläutert werden. Hierbei zeigen:
- Fig. 1: eine mögliche Architektur des erfindungsgemäßen Fahrdynamiksystems, umfassend Primärsteuereinheit, erstes und zweites Bremsmodul, einen Lenkaktuator sowie Fahrzeugelektromotoren;
- Fig. 2: eine Übersicht der Signal-Ein- und -Ausgänge der Primärsteuereinheit aus Fig. 1;
- Fig. 3: ein erstes Ausführungsbeispiel der Erfindung mit elektronischem Pedal und integriertem Bremspedalmodul;
- Fig. 4: ein zweites Ausführungsbeispiel mit getrenntem Bremspedalmodul;
- Fig. 5: ein drittes Ausführungsbeispiel, bei dem das erste und das zweite Bremsmodul in eine Baueinheit integriert sind;
- Fig. 6: ein viertes Ausführungsbeispiel, bei dem das erste und das zweite Bremsmodul jeweils gesondert kommunikativ mit der Primärsteuerung verbunden sind;
- Fig. 7: eine schematische Darstellung eines ersten Bremsmoduls mit angeschlossenem zweiten Bremsmodul;
- Fig. 8: eine schematische Darstellung eines ersten Bremsmoduls mit angeschlossenem zweiten Bremsmodul;
- Fig. 9: eine schematische Darstellung eines integrierten ersten und zweiten Bremsmoduls;
- Fig. 10, 11: ein Druckabbau bzw. -aufbau bei ausgefallenem Motor in dem zweiten Bremsmodul zur Bremsung eines Fahrzeugs;
- Fig. 12, 13: ein Druckabbau bzw. -aufbau bei ausgefallenem Motor in dem zweiten Bremsmodul zur Erzeugung eines Giermomenteingriffs; und
- Fig. 14: eine Übersicht der verfügbaren Redundanzen.

In der nachfolgenden Beschreibung werden für gleiche und gleich wirkende Teile weitestgehend dieselben Bezugsziffern verwendet.

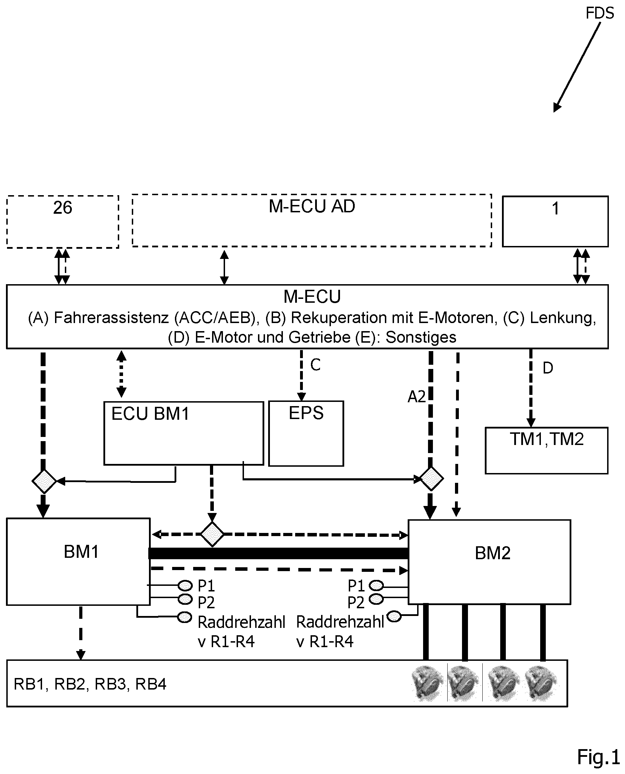

Figur 1 zeigt eine mögliche Architektur zur Implementierung des erfindungsgemäßen Fahrdynamiksystem FDS.

Dieses Ausführungsbeispiel des Fahrdynamiksystems FDS zeichnet sich vorteilhaft dadurch aus, dass ein zentraler Zugriff auf ein Bremssystem und ein Lenkungssystem eines Fahrzeuges durch unterschiedliche Steuergeräte bzw.

Domänen für pilotiertes und autonomes Fahren geschaffen wird, derart, dass die Fahrdynamik eines Fahrzeuges zentral gesteuert wird, indem an das Lenkungssystem und das Bremssystem Sollstellsignale geschickt werden.

Das Fahrdynamiksystem FDS umfasst dabei vorzugsweise:
- einen elektrischen Lenkaktuator (Servolenkung EPS), der auf eine Fahrzeugachse wirkt und einen Lenkwinkel und ein Lenkmoment einer Fahrzeugachse einstellt;
- einen ersten Bremsmodul BM1;
- einen zweiten Bremsmodul BM2;
- ein Bremsmodul-Steuergerät ECUBM1, ECUBM2 für das erste und zweite Bremsmodul BM1, BM2;
- eine Primärsteuereinheit M-ECU;
- eine AD-Steuereinheit.

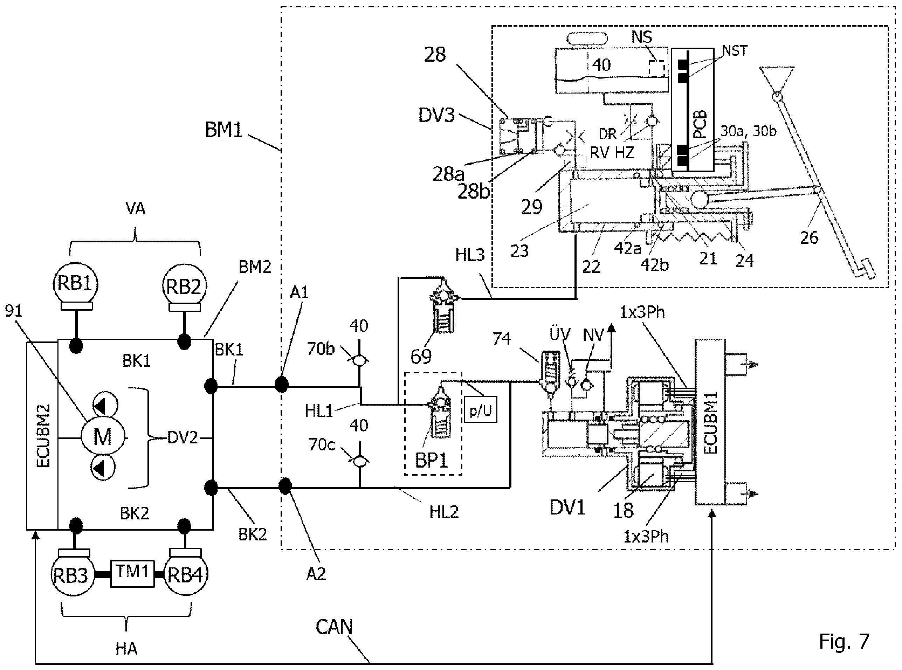

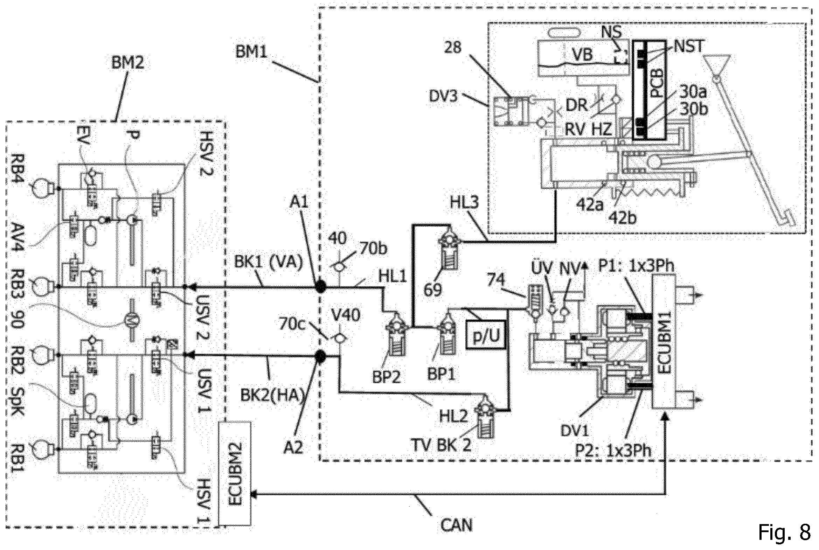

Die Bremsmodule BM1, BM2 können auch in ein primäres Bremsmodul BM1 und sekundäres Bremsmodul BM2 unterteilt werden, wobei im Fahrdynamiksystem FDS gemäß diesem Ausführungsbeispiel alle Primärfunktionen der Fahrdynamik (Bremskraftverstärkung mit elektronischer Bremskraftverteilung, ABS/ESP, Lenkung und Torque-Vectoring, Stillstandsbremse) redundant abgebildet werden. Als Bremsmodul BM1 wird vorzugsweise ein elektrohydraulischer Bremskraftverstärker mit Wegsimulator 28 eingesetzt. In einem Ausführungsbeispiel handelt es sich hierbei um ein Bremsmodul BM1 wie dieses in der Fig. 7 oder 8 dargestellt ist.

Als zweites Bremsmodul BM2 kann ein Standard ESP-System eingesetzt werden, das im Hinblick auf externe Betätigung der Magnetventile über ein Interface modifiziert ist (vgl. z. B. Fig. 8). Das erste und das zweite Bremsmodul BM1, BM2 sind über mindestens eine Hydraulikleitung verbunden, wobei im Ausführungsbeispiel der Fig. 1 eine serielle Anordnung dargestellt ist, bei der ein von dem ersten Bremsmodul BM1 aufgebauter Druck mittelbar über das zweite Bremsmodul BM2 an Radbremsen RB1 - RB4 weitergegeben wird. Konkreter ausgeführte Beispiele einer seriellen Anordnung der Bremsmodule BM1, BM2 lassen sich den Fig. 7, 8 entnehmen.

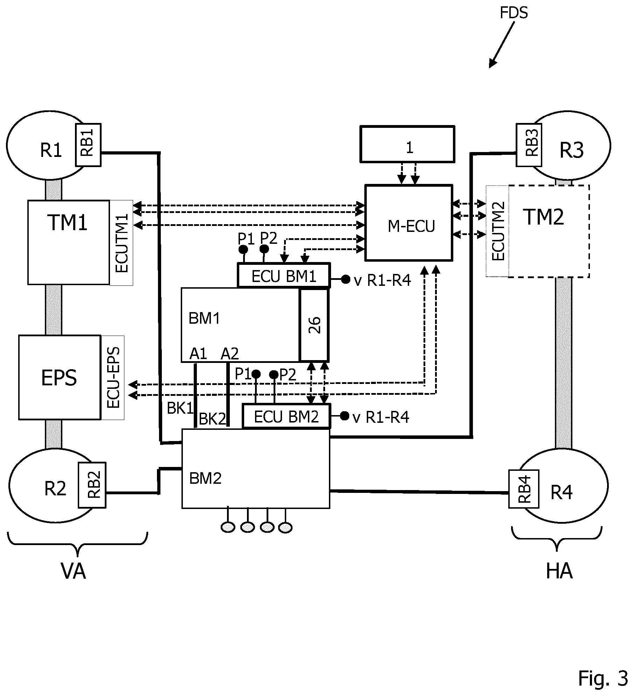

Neben den Bremsmodulen BM1, BM2 und dem Lenkaktuator (z. B. Servolenkung, EPS) wird vorzugsweise mindestens ein starker elektrischer Fahrzeugelektromotor TM1, TM2 mit einer Leistung >30 kW eingesetzt, der ebenfalls in das Fahrdynamiksystem FDS eingebunden ist. Synergieeffekte der Bremsmodule BM1, BM2 mit den Fahrzeugelektromotor TM1, TM2 im Sinne der Maximierung der Rekuperation von kinetischer Energie beim Bremsen können in einigen Ausführungsbeispielen der Erfindung vorteilhaft ausgenutzt werden, wobei die Druckregelung bei der Rekuperation die elektrische Bremskraftverteilung auf die Vorderachse VA und Hinterachse HA (vgl. Fig. 3, 4, 5) entsprechend der Rekuperationsleistung der Fahrzeugelektromotoren TM1, TM2 bedarfsgerecht angepasst werden kann.

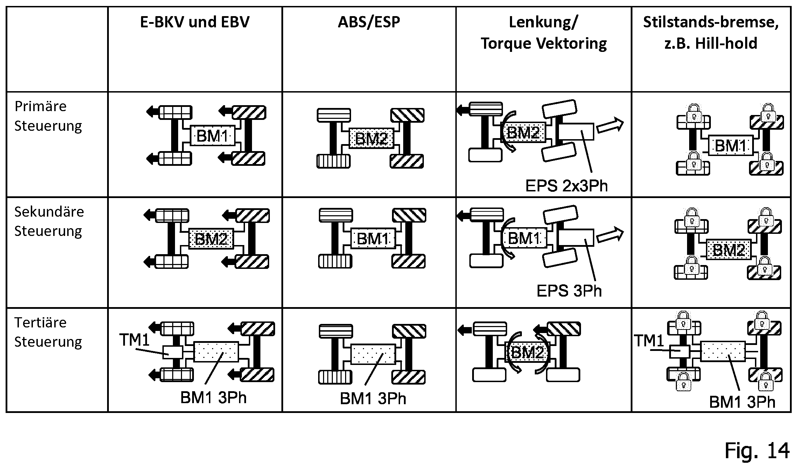

In einigen Ausführungsbeispielen wirken die Bremsmodule BM1, BM2 zusammen mit der elektrischen Servolenkung EPS und verbessert zum einen die Agilität durch Giermomenteingriffe, wobei einzelne oder mehrere Radbremsen RB1 - RB4, die jeweils Rädern R1 - R4 (z. B. Fig. 3) zugeordnet sind, aktiviert werden. Gemäß einem Ausführungsbeispiel kann in einem aktiven Betrieb sowohl die Fahrdynamik als auch die Effizienz des Fahrzeuges durch Maximierung der Rekuperation von Bremsenergie optimiert werden. Bei einem Ausfall von einzelnen Komponenten bietet das Fahrdynamiksystem FDS zumindest in einigen Ausführungsbeispielen eine Dreifachredundanz der Primärfunktionen an, wie dies exemplarisch in der Fig. 14 illustriert ist.

Im Ausführungsbeispiel kontrolliert und plant ein Steuergerät für autonomes Fahren, im Weiteren AD-Steuereinheit M-ECUAD, das autonome Fahren. Die Primärsteuereinheit M-ECU kontrolliert das pilotierte Fahren und empfängt Steuerbefehle von der AD-Steuereinheit M-ECUAD. Die Primärsteuereinheit M-ECU steuert in dem beschriebenen Ausführungsbeispiel eine große Anzahl von Stellern während des autonomen und pilotierten Fahrbetriebs. Die Primärsteuereinheit M-ECU kann Fahrerwunschsignale einlesen, welche beispielsweise über ein Betätigungselement 26, z. B. ein Bremspedal, und ein Gaspedal 1 eingegeben werden.

In einem Ausführungsbeispiel werden die Fahrerwunschsignale redundant übertragen. Die Primärsteuereinheit M-ECU schickt Sollwerte oder Bremsbefehle an die Bremsmodule BM1, BM2, die elektrische Servolenkung EPS und den/die Fahrzeugelektromotor(en) TM1, TM2. Für das Bremsenmanagement werden die Signale entweder direkt an die Aktuatoren bzw. Steller geschickt oder an das Bremsenmanagement des Bremsmodul-Steuergeräts ECUBM1. Werden die Signale direkt geschickt, werden die Signale vorzugsweise durch das Bremsmodul-Steuergerät ECUBM1 überwacht und freigegeben. In einem Ausführungsbeispiel kann eine Beschränkung auf nicht sicherheitskritische Stellsignale erfolgen. Bei sicherheitskritischen Funktionen, wie z. B. ABS/ESP oder ASR-Eingriffe, erfolgt die Steuerung über ein erstes Bremsmodul-Steuergerät ECUBM1. Auch bei Torque-Vektoring-Eingriffen zur Verbesserung der Agilität des Fahrzeuges überwacht vorzugsweise das erste Bremsmodul-Steuergerät ECUBM1 die Sollsignale, da Torque-Vektoring-Eingriffe Einfluss auf die Stabilität und Sicherheit haben können. Das Vorsehen einer eigenen Steuereinheit in Form der AD-Steuereinheit ist optional. In einem Ausführungsbeispiel werden deren Funktionen in der Primärsteuereinheit M-ECU implementiert. Alternativ kann das beschriebene Fahrdynamiksystem FDS auch ohne die AD-Steuereinheit M-ECUAD betrieben werden.

In dem Ausführungsbeispiel nach Fig. 1 können Hersteller der Module (Bremse, Lenkung) Zugriff auf ihre Aggregate zunächst für bestimmte Funktionen erhalten. Die Fahrdynamikmodule wie Bremsmodul BM1, BM2 (Systemmodul A und B), elektromechanische Lenkaktuator (Systemmodul C) und elektrischer Antrieb (z. B. Fahrzeugelektromotor TM1 und/oder TM2) (Systemmodul D) werden dann zu ausführenden Stellern der Primärsteuereinheit M-ECU. Beispielsweise sendet die Primärsteuereinheit M-ECU ihrerseits Signale bzw. Steuerbefehle an das Bremssystem, die durch das erste Bremsmodul BM1 (Primärfunktion) und das zweite Bremsmodul BM2 (Sekundärfunktion) ausgeführt werden. Die Bremsmodule BM1, BM2 können in einem oder in gesonderten Gehäusen untergebracht werden - sogenannte 1-Box- oder 2-Box-Lösungen. Bei den Signalen bzw. Befehlen kann es sich um Sollsignale für das gewünschte Bremsmoment an den Radbremsen RB1-RB4, insbesondere Solldrücke bzw. Solldruckverläufe für Fahrerassistenzfunktion (DA), u.a die aktive Abstandskontrolle (ACC) und Notbremsfunktion (AEB), sowie um Sollwerte für den Rekuperationsbetrieb des Fahrzeugelektromotors TM1 und/oder TM2 handeln. Beim Rekuperationsbetrieb kann erfindungsgemäß das hydraulische Bremsmoment reduziert und in gewissen Fällen komplett auf null gesetzt werden, wenn bei geringen Geschwindigkeiten ausschließlich über den Fahrzeugelektromotor TM1 und/oder TM2 gebremst wird.

In einigen Ausführungsbeispielen werden mehrere Fahrzeugelektromotoren TM1, TM2 an mehreren Achsen, insbesondere an der Vorderachse VA und der Hinterachse HA eingesetzt. In diesen Ausführungsbeispielen ist die elektrische Bremskraftverteilung (EBV) von großer Bedeutung, weil unterschiedliche Achslastverteilungen und Leistungsauslegungen der Fahrzeugelektromotors TM1, TM2 üblich sind. Im Fahrbetrieb muss die Bremskraftverteilung daher erfindungsgemäß dynamisch angepasst werden.

Ein weiterer Vorteil der Erfindung besteht darin, dass Fahrdynamikeingriffe über Torque-Vectoring zum einen zur Verbesserung der Agilität des Fahrzeuges in der Kurvenfahrt in Kombination mit einer elektrischen Servolenkung EPS vorgenommen werden können. Hierbei können die Bremsmodule BM1, BM2 dazu dienen, gezielt Giermomente durch eine radindividuelle Bremsdruckregelung zu erzeugen.

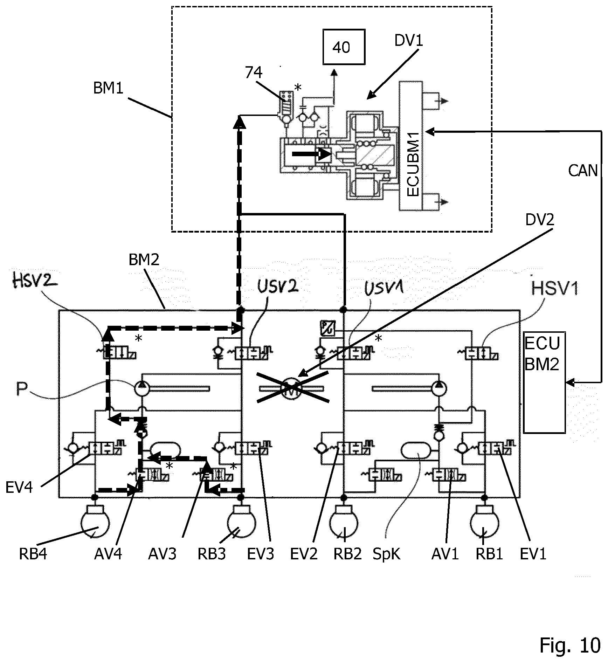

In einem Ausführungsbeispiel wird dieser Eingriff über das zweite Bremsmodul BM2 (ggf. auch ESP-Einheit) durchgeführt. In einem anderen Ausführungsbeispiel erfolgt der Eingriff über das erste Bremsmodul BM1 mit Druckregelung über eine erste Druckversorgungseinrichtung DV1, beispielsweise unter Nutzung der Einlassventile EV1-EV4 (vgl. z. B. Fig. 10). Die Giermomentregelung über das erste Bremsmodul BM1 hat den Vorteil der höheren Dynamik, da ein starker bürstenloser EC-Motor (vgl. z. B. Antrieb 18 aus Fig. 7) eingesetzt werden kann.

In einem Ausführungsbeispiel ist die Präzision der PPC-Druckreglung verbessert. Hierfür ist das zweite Bremsmodul BM2 dahingehend modifiziert, dass die Einlassventile EV1 - EV4 von dem ersten Bremsmodul BM1 oder der Primärsteuereinheit M-ECU angesteuert werden können. In diesem Ausführungsbeispiel können Messsignale des zweiten Bremsmoduls BM2 wie z. B. Druckmessungen von dem ersten Bremsmodul BM1 oder der Primärsteuereinheit M-ECU ausgelesen werden.

Das Bremssystem kann so konzeptioniert sein, dass ein erstes und/oder zweites Bremsmodul-Steuergerät ECUBM1, ECUBM2 die Eingriffe der Primärsteuereinheit M-ECU kontrolliert und die Kontrolle ggf. freigibt, soweit sich das Fahrzeug in einem sicheren Zustand befindet. In einem unsicheren Zustand kann das erste und/oder zweite Bremsmodul-Steuergerät ECUBM1, ECUBM2 die Kontrolle übernehmen und/oder Steuerbefehle oder Sollwerte modifizieren. Die Giermomenteingriffe über Drucksteller (z. B. über die erste und/oder zweite Druckversorgungseinheit DV1, DV2) hat für das autonome Fahren ab SAE-Stufe 4 eine hohe Relevanz. Erfindungsgemäß kann bei einem Ausfall der elektrischen Servolenkung EPS durch die radindividuelle Druckregelung der Radbremsen RB1-RB4 dynamisch gelenkt werden. Hierdurch kann das Fahrzeug sicher in eine ungefährliche Zone abseits der Fahrbahn geführt werden. Eine komplette Lenkung des Fahrzeuges ist bei geringen Geschwindigkeiten mit Komforteinbußen möglich.

In einem Ausführungsbeispiel wird ein Elektromotor einer elektromechanischen Servolenkung EPS mit 2x3 Phasen und redundanter ECU ausgelegt. Dies kann die Ausfallrate der elektrischen Servolenkung EPS von 100 Fit auf 10 Fit reduzieren und somit die Verfügbarkeit deutlich erhöhen. Der Lenkungsbetrieb kann bei einem Ausfall von 1x3 Phasen dann mit geringerer Dynamik noch betriebsfähig gehalten werden und durch Giermomenteingriffe über die Bremsmodule BM1, BM2 im dynamischen Fahrbetrieb unterstützt werden.

Das gleiche gilt für das Bremssystem. In einem Ausführungsbeispiel sind auch die Wicklungen der Antriebe der Druckversorgungseinheiten DV1, DV2 und die zugehörigen ECUs redundant ausgelegt. Bei Ausfall eines 1x3 Phasenstranges kann noch die Druckregelung mit einer geringeren Dynamik und beispielsweise ca. 50% des Auslegungsdruckes der Druckversorgungseinheiten DV1, DV2 betrieben werden.

Die Notlenkung wird bei Ausfall der elektrischen Servolenkung EPS durch mindestens eines der Bremsmodul-Steuergeräte ECUBM1, ECUBM2 kontrolliert.

Im Ausführungsbeispiel nach Fig. 1 ist zumindest eines der Bremsmodule BM1, BM2 redundant ausgeführt, sodass eine redundante Elektronik, 2x3 Phasenanschlüsse sowie Anschlüsse an zwei Bordnetze P1 und P2 vorgesehen sind. Weiterhin kann bei einem Ausfall einer Druckversorgung DV1, DV2 die Regelung durch die zweite noch funktionsfähige Druckversorgungseinheit DV1, DV2 übernommen werden.

Erfindungsgemäß kann weiterhin, wie in dem Ausführungsbeispiel gezeigt, eine redundante Kommunikation zwischen den Modulen vorgesehen sein. Beide Bremsmodule BM1 und BM2 lesen redundant die Raddrehzahlsensoren von den vier Rädern R1-R4 ein. Alternativ werden von einer der Bremsmodule, beispielsweise vom zweiten Bremsmodul BM2, die Raddrehzahlmesswerte über ein Interface, z. B. CAN-Bus (CAN) an das andere Bremsmodul, beispielsweise das erste Bremsmodul BM1 übertragen.

In einem Ausführungsbeispiel ist über eine Schnittstelle ein Zugriff auf zumindest einige der Ventile (z. B. die Einlassventile EV1-EV4 und/oder Auslassventile AV1-AV4) des zweiten Bremsmoduls BM2 durch das erste Bremsmodul BM1 eingerichtet.

Die Primärsteuereinheit M-ECU greift in einem Ausführungsbeispiel direkt auf die Bremssattel zu, wobei der Bremssattel an zwei Rädern eine elektrische Parkbremse (EPB) aufweisen kann. In einem Ausführungsbeispiel ist der Bremssattel derart ausgelegt, dass ein Lüftspiel vorliegt und keine Restreibung in der Bremsanlage entsteht, wenn die Bremse nicht betätigt ist. Auf Grund des durch Umweltfaktoren bedingte variablen Lüftspiels wird die Bremsregelung so angepasst, dass im Brake-by-Wire-Betrieb keine veränderte Pedalcharakteristik vom Fahrer wahrnehmbar ist. Hierzu kann zur Überbrückung des Lüftspiels mittels der Fahrzeugelektromotoren TM1, TM2 verzögert werden.

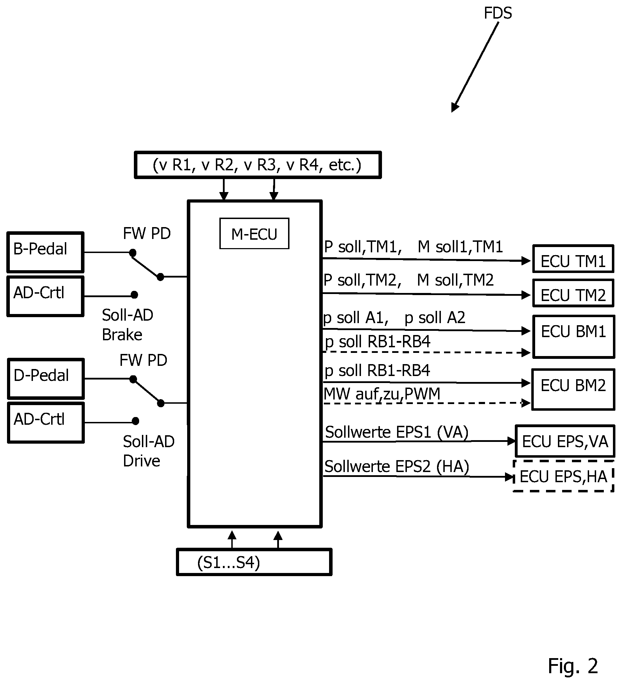

Fig. 2 veranschaulicht Ein- und Ausgänge der Primärsteuereinheit M-ECU.

Diese ist mittig dargestellt. Linksseitig befinden sich die Eingänge der AD-Steuereinheit sowie die Eingänge des Gaspedals 1 sowie des Betätigungselements 26, beispielsweise der Bremse. Anhand der Fig. 2 ist es ersichtlich, dass eine Auswahl getroffen werden kann, ob hinsichtlich der Beschleunigung des Fahrzeugs Signale von dem Gaspedal 1 oder von der AD-Steuereinheit empfangen werden soll. Dementsprechend kann eine Auswahl zwischen Signalen von dem Betätigungselement 26 - der Bremse - und wiederum der AD-Steuereinheit getroffen werden. Letztendlich werden seitens der Primärsteuereinheit M-ECU Steuerbefehle, insbesondere Lenk- und Bremsbefehle, entweder von der AD-Steuereinheit oder von den jeweiligen Betätigungselementen empfangen.

Die Primärsteuereinheit M-ECU empfängt weiterhin Signale von Geschwindigkeitssensoren, die beispielsweise die Drehgeschwindigkeit der einzelnen Räder R1 - R4 angeben (vgl. die VR1-VR4). Die Primärsteuereinheit M-ECU gibt ihrerseits Stellsignale an die einzelnen Aktuatoren aus.

In der Fig. 2 sind exemplarisch das erste und zweite Bremsmodul-Steuergerät ECUBM1, ECUBM2 sowie weitere Steuergeräte ECUTM1, ECUTM2, ECUEPS-VA, ECUEPS-HA angegeben. Anders als in der Fig. 1 sind in dem Ausführungsbeispiel gemäß Fig. 2 zwei gesonderte Steuergeräte für das erste Bremsmodul BM1 und das zweite Bremsmodul BM2 vorgesehen.

Eine entsprechende Detailkonfiguration ergibt sich anhand der Fig. 3. Hier ist schematisch ein Fahrdynamiksystem FDS eines Fahrzeugs gezeigt. Die Räder R1, R2 sind an einer Vorderachse VA angeordnet. Dementsprechend sind die Räder R3, R4 an einer Hinterachse HA angeordnet. Die Vorderachse VA sowie die Hinterachse HA werden über Fahrzeugelektromotoren TM1 bzw. TM2 angetrieben. Die jeweiligen Fahrzeugelektromotoren TM1, TM2 weisen Steuergeräte auf (vgl. ECUTM1, ECUTM2). Wie anhand der Fig. 3 durch die nicht-durchgezogenen Linien verdeutlicht, ist der zweite Fahrzeugelektromotor TM2 optional. Den einzelnen Rädern R1 - R4 sind jeweils die Radbremsen RB1 - RB4 zugeordnet. Die Radbremsen RB1 - RB4 werden über hydraulische Leitungen von dem zweiten Bremsmodul BM2 mit Druckmittel versorgt. Dies bedeutet nicht zwangsläufig, dass das zweite Bremsmodul BM2 den entsprechenden Bremsdruck bereitstellt. Es wird lediglich illustriert, dass die Fluidverteilung unter Nutzung von Leitungen des zweiten Bremsmoduls BM2 erfolgt. Das zweite Bremsmodul BM2 steht seinerseits über zwei Anschlusspunkte A1, A2 in fluider Verbindung mit dem ersten Bremsmodul BM1. Über die Anschlusspunkte A1, A2 werden ein erster Bremskreis BK1 und ein zweiter Bremskreis BK2 mit Druckmittel versorgt. Den beiden Bremsmodulen BM1, BM2 sind jeweils dezidierte Bremsmodul-Steuergeräte ECUBM1, ECUBM2 zugeordnet. An der Vorderachse VA befindet sich die Servolenkung EPS mit zugehörigem Steuergerät. Die Primärsteuereinheit M-ECU empfängt wie bereits beschrieben, Signale von einem elektrischen Gaspedal 1. Die Signalstrecke zwischen dem Gaspedal 1 und der Primärsteuereinheit M-ECU ist redundant ausgebildet. Dementsprechend existieren redundante Kommunikationswege bzw. Kommunikationsverbindungen zu den Steuergeräten des ersten Fahrzeugelektromotors TM1, des zweiten Fahrzeugelektromotors TM2, und des ersten Bremsmoduls BM1. Diese Kommunikationsverbindungen können drahtlos oder drahtgebunden ausgebildet sein. Teilweise empfiehlt sich eine Mehrfach-Redundanz, wie diese exemplarisch zwischen der Primärsteuereinheit M-ECU und den Fahrzeugelektromotoren TM1, TM2 illustriert ist. Bei einer entsprechenden Mehrfach-Redundanz kann auch eine teilweise kabelgebundene und eine teilweise kabellose Anbindung über Funk erfolgen.

Das zweite Bremsmodul BM2 bzw. das Bremsmodulsteuergerät ECUBM2 ist kommunikativ lediglich mit dem ersten Bremsmodul BM1 bzw. dem ersten Bremsmodul-Steuergerät ECUBM1 verbunden. Die Primärsteuereinheit M-ECU kommuniziert somit mittelbar über das erste Bremsmodul-Steuergerät ECUBM1 mit dem zweiten Bremsmodul-Steuergerät ECUBM2.

Charakteristisch für das Ausführungsbeispiel gemäß Fig. 3 ist, dass das Brems-Betätigungselement 26 Teil des ersten Bremsmoduls BM1 ist. Ein über das Bremspedal ausgeübter Bremswunsch wird somit direkt von dem ersten Bremsmodul-Steuergerät ECUBM1 empfangen und ggf. in Kooperation mit dem zweiten Bremsmodul-Steuergerät ECUBM2 umgesetzt.

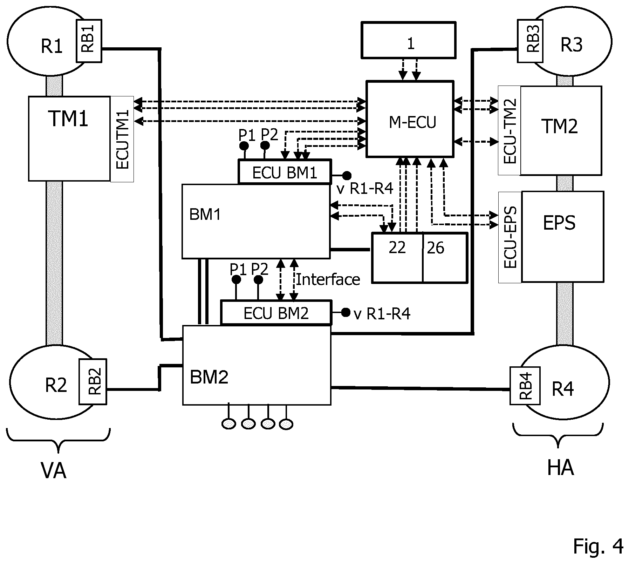

Demgegenüber verfügt das Ausführungsbeispiel gemäß Fig. 4 über ein gesondertes Modul mit einem Hauptbremszylinder 22 sowie dem Betätigungselement 26 zur Betätigung des Kolbens 24. Sensoren, beispielsweise Pedalwegsensoren 30a, 30b können von dem ersten Bremsmodul-Steuergerät ECUBM1 empfangen werden. In dem gezeigten Ausführungsbeispiel gibt es eine fluide Verbindung zwischen diesem zusätzlichen Modul und dem ersten Bremsmodul. Das heißt, dass in einer Rückfallebene über das Betätigungselement 26 ein Bremsdruck aufgebaut und an die einzelnen Radbremsen RB1 - RB4 abgegeben werden kann. In den Fig. 7 und 8 sind entsprechende Ausführungsbeispiele detaillierter gezeigt (vgl. dritte Druckversorgungseinheit DV3). Im Übrigen weist das System gemäß Fig. 4 große Ähnlichkeiten zu dem System gemäß Fig. 3 auf.

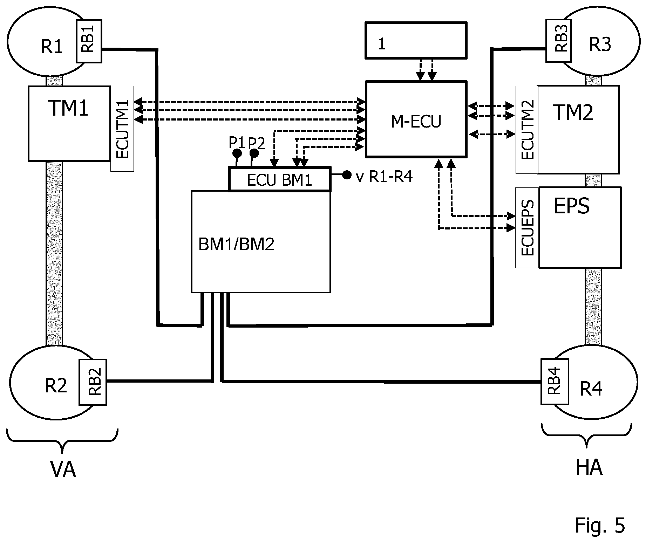

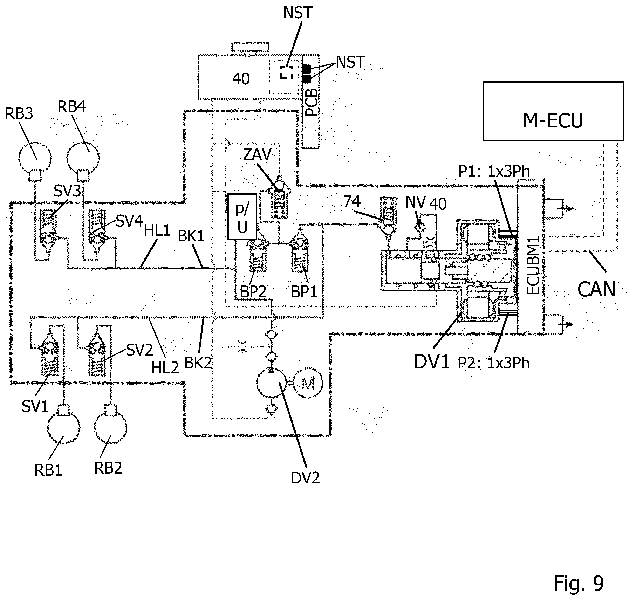

In dem Ausführungsbeispiel gemäß Fig. 5 sind das erste Bremsmodul BM1 und das zweite Bremsmodul BM2 in einer Moduleinheit zusammengefasst. Bei der sogenannten 1-Box-Lösung teilen sich die Bremsmodule BM1, BM2 zumindest ein Gehäuse. In der in Fig. 5 gezeigten Ausführungsform wird ein gemeinsames Bremsmodul-Steuergerät ECUBM1 verwendet. Das Steuergerät kann auch redundant ausgeführt sein, z. B. können separate Steuergerät ECUBM1, ECUBM2, ECUMV für jede Druckversorgung sowie die Ventileinrichtung vorgesehen sein. Das entsprechende Ausführungsbeispiel kann derart ausgeführt sein, wie dies in Fig. 9 gezeigt ist.

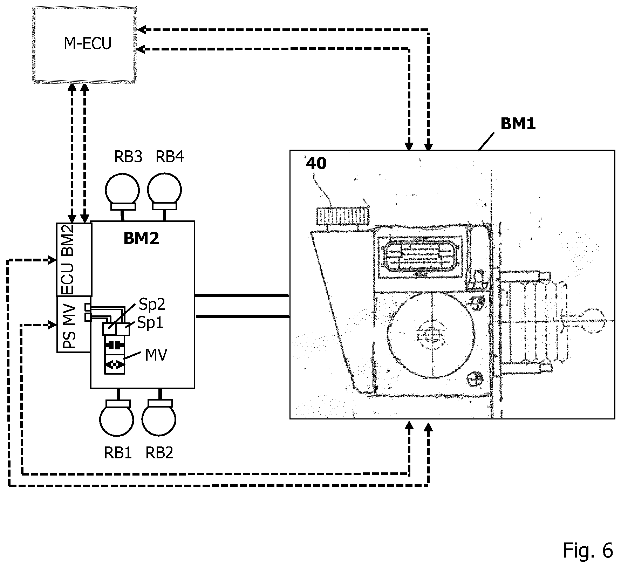

Fig. 6 illustriert eine weitere 2-Box-Lösung, bei der das erste Bremsmodul BM1 und das zweite Bremsmodul BM2 gesondert ausgeführt sind. Auch in diesem Ausführungsbeispiel bestehen redundante Kommunikationsverbindungen zwischen dem ersten Bremsmodul BM1 und dem zweiten Bremsmodul BM2 bzw. dem zugehörigen ersten und zweiten Bremsmodul-Steuergerät ECUBM1, ECUBM2.

Des Weiteren sind die jeweiligen Bremsmodul-Steuergeräte ECUBM1, ECUBM2 jeweils redundant an die Primärsteuereinheit M-ECU angebunden.

Fig. 7 zeigt ein Prinzipschaltbild eines Bremssystems mit einem ersten und zweiten Bremsmodul BM1, BM2. Das erste Bremsmodul BM1 hat eine erste Druckversorgungseinheit DV1 mit einem elektromotorischen Antrieb 18 sowie eine dritte Druckversorgungseinheit DV3 mit dem Hauptbremszylinder 22 und dem Betätigungselement 26.

Das zweite Bremsmodul BM2 umfasst eine elektrisch angetriebene Motor-PumpenEinheit (vgl. auch Detailausführung zum zweiten Bremsmodul in Fig. 10) als zweite Druckversorgungseinheit DV2. Bei dem zweiten Bremsmodul BM2 kann es sich um eine beliebige ESP-Einheit handeln. Eine geeignete ESP-Einheit ist in der DE 10 2014 205 645 A1 im Detail beschrieben. Alternativ kann als zweites Bremsmodul BM2 eine Standard-ABS-Einheit ohne ESP-Funktion eingesetzt werden. Vorzugsweise wird ein zweites Bremsmodul BM2 verwendet, wie dies nachfolgend beschrieben wird.

Die beiden Bremsmodule BM1, BM2 sind dazu eingerichtet, die zwei Bremskreise BK1 und BK2 mit Druckmittel zu beaufschlagen, wobei die Bremsmodule BM1, BM2 vorzugsweise hydraulisch in Serie geschaltet sind. Anschlusspunkte A1, A2 dienen zur Verbindung.

Die erste Druckversorgungseinheit DV1 ist über eine erste Hydraulikleitung HL1 mit dem ersten Bremskreis BK1 bzw. der entsprechenden Schnittstelle verbunden. Weiterhin ist eine zweite Hydraulikleitung HL2 zur Verbindung der ersten Druckversorgungseinheit DV1 mit dem zweiten Bremskreis BK2 bzw. der entsprechenden Schnittstelle vorgesehen.

Gemäß dem Ausführungsbeispiel hat die dritte Druckversorgungseinheit DV3 des ersten Bremsmoduls BM1 einen Hauptbremszylinder 22 mit einem Kolben 24 und einer Kolbenkammer 23. Im Ausführungsbeispiel ist die dritte Druckversorgungseinheit DV3 einkreisig ausgeführt und steht über eine dritte Hydraulikleitung HL3 und ein Einspeiseventil 69 mit dem Bremskreis BK1 bzw. der entsprechenden hydraulischen Schnittstelle in Verbindung (vgl. Anschlusspunkt A1). Eine fluide Verbindung zu der zweiten Hydraulikleitung HL2 führt über ein optionales (durch gestrichelte Umrandung verdeutlicht) erstes Trennventil BP1. Die dritte Druckversorgungseinheit DV3 ist durch ein Schließen des Einspeiseventils 69 von den Bremskreisen BK1, BK2 derart abtrennbar, dass im normalen Brake-by-Wire-Betrieb ohne Fehler (z. B. ohne Bremskreisausfall) das Betätigungselement 26 nur auf einen Wegsimulator 28 wirkt.

In dem Ausführungsbeispiel nach Fig. 7 sind die Bremskreise BK1 und BK2 über das optionale erste Trennventil BP1, wenn vorhanden, (vorzugsweise stromlosoffen) (auf)trennbar. Erfindungsgemäß kann somit bei einem Ausfall der ersten Druckversorgungseinheit DV1 der Hauptbremszylinder 22 der zweiten Druckversorgungseinheit DV2 entweder nur mit dem ersten Bremskreis BK1 oder mit dem ersten und dem zweiten Bremskreis BK1, BK2 durch ein Öffnen des ersten Trennventils BP1 verbunden werden. Für diesen Notbetrieb ist das Einspeiseventil 69 als stromlos-offenes Ventil ausgebildet. Soweit noch Strom anliegt, wird es im besagten Fehlerfall geöffnet, sodass die dritte Druckversorgungseinheit DV3 nicht mehr von den Bremskreisen BK1, BK2 hydraulisch entkoppelt ist.

Die erste Druckversorgungseinheit DV1 wirkt ebenso wahlweise auf den zweiten Bremskreis BK2 (erstes Trennventil BP1 geschlossen) oder beide Bremskreise BK1, BK2 (erstes Trennventil BP1 geöffnet oder stromlos offen).

Im Normalbetrieb ist das erste Trennventil BP1 offen, so dass die erste Druckversorgungseinheit DV1 beide Bremskreise BK1, BK2 mit Druck versorgt und die dritte Druckversorgungseinheit DV3 ist durch das geschlossene Einspeiseventil 69 vom ersten Bremskreis BK1 abgekoppelt. Wird festgestellt, dass Druckmittel aus den Bremskreisen BK1, BK2 verlorengeht, kann mittels des ersten Trennventils BP1 der Bremskreis BK1 von der ersten Druckversorgungseinheit DV1 abgekoppelt werden, sodass bei einem Leck im ersten Bremskreis BK1 der zweite Bremskreis BK2 ohne Hydraulikmittelverluste weiterbetrieben werden kann.

Im Ausführungsbeispiel ist das Trennventil BP1 als Magnetventil ausgeführt, wobei der Kugelsitz des Trennventils BP1 über einen Anschluss (Ventilsitz-Anschluss) an den Abschnitt der Hydraulikleitung angeschlossen ist, der zu der ersten Druckversorgungseinheit DV1 hinführt. Damit kann das Trennventil BP1 auch bei einem Ausfall des ersten Bremskreises BK1 durch Bestromung sicher geschlossen werden und wird nicht bei Betrieb der ersten Druckversorgungseinheit DV1 durch höhere Drücke aufgedrückt.

Die dritte Druckversorgungseinheit DV3 speist bei einer Betätigung des Betätigungselements 26 den Wegsimulator 28 über ein Schnüffelloch in einer Wandung des Hauptbremszylinders 22, sodass in Abhängigkeit einer Größe der Betätigung des Betätigungselements 26 ein progressiver haptischer Widerstand in Form einer Rückstellkraft spürbar ist. Unter der Größe der Betätigung kann hierbei verstanden werden, wie "fest und/oder wie weit" ein Fahrer das als Bremspedal ausgebildete Betätigungselement 26 betätigt und somit den Kolben 24 in den Hauptbremszylinder 22 schiebt. Der progressive haptische Widerstand wird auch als Pedalcharakteristik bezeichnet.

Zum Absperren der Verbindung zum Wegsimulator 28 kann ein Wegsimulator-Ventil 29 vorgesehen sein.

Die dritte Druckversorgungseinheit DV3 weist zumindest eine Schnüffelbohrung auf, die über Hydraulikleitungen mit einem Vorratsbehälter 40 verbunden ist. Der Vorratsbehälter 40 kann Teil des ersten Bremsmoduls BM1 sein.

Wie dargestellt weist der Hauptbremszylinder 22 zwei Dichtelemente 42a, 42b auf, die als Ringdichtungen ausgebildet sind. Die Schnüffelbohrung 38 ist zwischen den beiden Dichtelementen 42a, 42b angeordnet. In der Verbindung zwischen der Schnüffelbohrung und dem Vorratsbehälter 40 ist eine Drossel DR angeordnet.

Die Drossel DR ist im Hinblick auf ihre Durchflussmenge so dimensioniert, dass die Pedalcharakteristik bei Ausfall des Dichtelements 42a nicht wesentlich verändert wird (z. B. 3 mm Pedalweg in 10 s). Zudem kann über die Drossel DR ein temperaturbedingter Volumenausgleich des Druckmittels erfolgen.

Bei einem ABS-Betrieb der zweiten Druckversorgungseinheit DV2 des zweiten Bremsmoduls BM2 können hohe Druckspitzen in den Bremskreisen BK1 und BK2 entstehen, die die erste Druckversorgungseinheit DV1 erheblich belasten. Ein Druckbegrenzungsventil ÜV ist in der Ausgestaltungsvariante gemäß Fig. 8 über eine Bohrung mit der Kolbenkammer der ersten Druckversorgungseinheit DV1 verbunden, damit die hohen Druckspitzen abgebaut werden und eine Schädigung des Systems vermieden wird.

Ein Saugventil NV steht ebenfalls mit der Kolbenkammer der ersten Druckversorgungseinheit DV1 in fluider Verbindung und ermöglicht das Nachfördern von Druckmittel aus dem Vorratsbehälter 40. Somit kann die erste Druckversorgungseinheit DV1 eigenständig zusätzliches Druckmittel in die Bremskreise BK1, BK2 einbringen. Ein zusätzlich vorgesehenes Schnüffelloch in dem Zylinder der ersten Druckversorgungseinheit DV1 ermöglicht einen Volumenausgleich in der Anfangsposition des Kolbens der ersten Druckversorgungseinheit DV1.

Die zweite Druckversorgungseinheit DV2 ist in der Fig. 7 nur schematisch dargestellt. Eine mögliche detailliertere Ausgestaltung ergibt sich aus der Fig. 8. In der schematischen Darstellung bedienen die Radbremsen RB1, RB2 eine Vorderachse VA des Fahrzeugs und die Radbremsen RB3 und RB4 eine Hinterachse HA des Fahrzeugs. An der Hinterachse HA des Fahrzeugs befindet sich der Fahrzeugelektromotor TM1, um das Fahrzeug anzutreiben. Bei dem Fahrzeug kann es sich um ein reines Elektrofahrzeug oder um ein Hybridfahrzeug handeln, wie dies bereits unter Bezugnahme von Fig. 1 erläutert wurde.

Wie anhand der Fig. 8 ersichtlich, ist der erste Bremskreis BK1 mit den Radbremsen RB1 und RB2 verbunden und der zweite Bremskreis BK2 mit den Radbremsen RB3 und RB4.

Die dritte Druckversorgungseinheit DV3 verfügt über ein gesondert ausgeführtes zweites Bremsmodul-Steuergerät ECUBM2.

Die dritte Druckversorgungseinheit DV3 hat eine Leiterplatine PCB, die einen Niveausensor NST aufweist, der die Position eines magnetischen Schwimmers NS innerhalb des Vorratsbehälters 40 erfasst. Die Leiterplatine PCB weist des Weiteren Sensoren 30a, 30b zur Erfassung des Pedalwegs sowie einer Wegdifferenz zwischen Kolben 24 und Pedalweg auf.

Zur Bereitstellung von zusätzlichem Druckmittel für die zweite Druckversorgungseinheit DV2 ist im ersten Bremskreis BK1 ein Saugventil 70b vorgesehen, welches die Pumpe der zweiten Druckversorgungseinheit DV2 mit dem Vorratsbehälter 40 verbindet.

Benötigt die Pumpe der zweiten Druckversorgungseinheit DV2 für den zweiten Bremskreis BK2 Druckmittel, so kann dieses aus dem Vorratsbehälter 40 über das Saugventil 70c bereitgestellt werden.

Somit sind die beiden Bremskreise BK1, BK2 durch die jeweiligen Hydraulikleitungen HL1, HL2 jeweils über ein Saugventil 70b bzw. 70c mit dem Vorratsbehälter 40 zum Ansaugen von Druckmittel verbunden. Um eine optimale Ansaugung des Druckmittels zu erreichen, weist das Saugventil 70b und 70c vorzugsweise einen Durchmesser im Bereich von 30 mm bis 50 mm und speziell einen Durchmesser von 40 mm auf.

Optional verfügt das Ausführungsbeispiel über eine Steuerung des Lüftspiels zwischen Bremsbelägen und Scheibenbremse. Die Radbremsen RB1, RB2, RB3, RB4 (vgl. Fig. 8) können als reibungsfreie Radbremsen RB1 - RB4 ausgebildet sein. Bei einem Brake-by-Wire-System (vgl. z. B. Fig. 1) ermöglichen Scheibenbremsen mit Bremsbelägen, die mit einem Lüftspiel ohne Druck in der Bremsanlage in Abstand stehen, eine Verringerung des Reibwiderstands. Dies kann durch den Einsatz von Rollbackdichtungen, Rückstellfedern der Bremsbeläge oder durch ein aktives Zurückziehen der Bremsbeläge durch Unterdruckerzeugung, wie in EP 2 225 133 vom Anmelder ausgeführt, erreicht werden.

Mittels der ersten Druckversorgungseinheit DV1 kann das im Betrieb sich veränderliche Lüftspiel in der Radbremse RB1 - RB4 radindividuell oder bremskreisindividuell durch Auswertung des Druckverlaufes gemessen werden. Erfindungsgemäß kann eine entsprechende Messung im Service, aber auch während des Betriebs des Fahrzeuges erfolgen. Vorzugsweise wird die Messung im Fahrzeugstillstand oder nach einer Bremsung vorgenommen.

Mit den bekannten Lüftspielwerten der Radbremsen RB1 - RB4 wird dann bei einer Aktivierung der Radbremsen RB1 - RB4 das Lüftspiel mittels einer Kolbenwegsteuerung der ersten Druckversorgungseinheit DV1 schnell überwunden. Diesbezüglich ist der Einsatz eines bürstenlosen Motors als elektromotorischer Antrieb 18 der ersten Druckversorgungseinheit DV1 mit kleiner Zeitkonstante zu bevorzugen, da das Überwinden des Lüftspiels realisiert werden kann, ohne dass der Fahrer dies beim Betätigen der Bremse wahrnimmt.

Zudem kann das Bremssystem so gesteuert werden, dass der Fahrzeugelektromotor TM1 und/oder TM2 in der Phase des Lüftspiels verzögernd wirkt. Somit wird unmittelbar bei Betätigung der Bremse eine Bremswirkung erzeugt.

In einem Ausführungsbeispiel der Erfindung werden Unterschiede in den Lüftspielen der Radbremsen RB1 - RB4 ausgeglichen, indem Einlassventile EV1 bis EV4 des zweiten Bremsmoduls BM2 angesteuert werden und/oder der Fahrzeugelektromotor TM1 und/oder TM2 zur Erzeugung einer Bremswirkung zum Beginn einer Bremsung genutzt wird. Mit dem Lüftspiel können allgemein Stick-Slip-Effekte von neuen Bremsanlagen bei geringen Geschwindigkeiten reduziert oder vermieden werden.

In einem Ausführungsbeispiel implementiert das Bremssystem, beispielsweise das zweite Bremsmodul-Steuergerät ECUBM2 bei einem Ausfall des zweiten Bremsmoduls BM2 in einer Variante eine Stotterbremse. Durch ein Vor- und Rückbewegen des Kolbens der ersten Druckversorgungseinheit DV1 zwischen einem oberen und unteren Druckbereich wird ein Blockieren der Räder R1 - R4 vermieden und die Lenkbarkeit aufrechterhalten. Bei dieser Form des Abbremsens werden im Vergleich zu einem 1-Kanal-ABS-Betrieb keine Messwerte, z. B. Druck und Radgeschwindigkeiten benötigt.

Die Stotterbremse führt zu ausreichenden Bremswegen (ca. 200 % des Bremsweges bei ABS im Vergleich zu einem vollwertigen radindividuellen ABS) und akzeptabler Stabilität durch Aufrechterhalten der Lenkbarkeit.

Alternativ zur Stotterbremse kann mit dem Bremssystem nach Fig. 7 oder 8 ein 1-kanaliger ABS-Betrieb mit "select-low"-Regelung umgesetzt werden. Dies führt zu einer weiteren Verschlechterung des Bremsweges (ca. 400 % Bremsweg im Vergleich zum Bremsweg mit einem vollwertigen radindividuellen ABS), jedoch zu einer uneingeschränkten Fahrzeugstabilität und ist in dieser Charakteristik der Stotterbremse überlegen. Bei dem 1-Kanal-ABS-Betrieb werden Messwerte wie z. B. Druck und Radgeschwindigkeiten benötigt, die über eine kommunikative Verbindung/Schnittstelle, z. B. CAN-Schnittstelle von der ESP-Einheit eingelesen werden können.

Um die Verfügbarkeit des erfindungsgemäßen Bremssystems gemäß Fig. 7 oder 8 weiter zu erhöhen, ist der elektromotorische Antrieb 18 der ersten Druckversorgungseinheit DV1 über zwei redundante Dreiphasenstränge an das erste Bremsmodul-Steuergerät ECUBM1 angeschlossen und die Elektronik ist (teil)redundant ausgeführt. Beispielsweise können zwei B6-Brücken für jeden Strang vorgesehen sein. Zudem ist die Elektronik in zumindest einem Ausführungsbeispiel an zwei redundante Spannungsversorgungen (Bordnetz P1, P2) angeschlossen. Damit kann die Ausfallwahrscheinlichkeit des elektromotorischen Antriebs 18 um den Faktor 4-10 reduziert werden und der Fehlerfall (Ausfall der ersten Druckversorgungseinheit DV1) weiter deutlich reduziert werden.

Die Bremsmodul-Steuergeräte ECUBM1, ECUBM2 sind über eine kommunikative Verbindung CAN, beispielsweise ein CAN-Bus, miteinander verbunden. Insofern ist es möglich, Steuerbefehle an die zweite Druckversorgungseinheit DV2 abzusetzen, die eine Betätigung des Antriebs 91 und/oder der vorgesehenen Ventile (vgl. auch Fig. 8) verursachen.

Mit dem Bremssystem nach Fig. 7 können folgende sicherheitsrelevante Redundanzen realisiert werden:
- Sicherstellung einer ausreichenden Bremswirkung zur Erfüllung der gesetzlichen Anforderungen bei Bremskreisausfall, Ausfall a) der zweiten Druckversorgungseinheit DV2, b) der ersten Druckversorgungseinheit DV1 oder c) der ersten Druckversorgungseinheit DV1 und der zweiten Druckversorgungseinheit DV2 (gleichzeitig), d. h. auch Erfüllung gesetzlicher Anforderungen bei Doppelfehlern:
   o Fehlerfall 1 - Ausfall der zweiten Druckversorgungseinheit DV2: Verzögerung durch Bremskraftverstärkung über die erste Druckversorgungseinheit DV1 in beiden Bremskreisen BK1, BK2;
   o Fehlerfall 2 - Ausfall der zweiten Druckversorgungseinheit DV2 und des Bremskreises BK1: Verzögerung durch Bremskraftverstärkung über erste Druckversorgungseinheit DV1, z. B. an der Hinterachse;
   o Fehlerfall 3 - Ausfall der zweiten Druckversorgungseinheit DV2 und des zweiten Bremskreises BK2: Verzögerung durch die dritte Druckversorgungseinheit DV3, z. B. an der Vorderachse (erstes Trennventil BP1 geschlossen)
   o Fehlerfall 4 - Ausfall der ersten Druckversorgungseinheit DV1: Verzögerung durch Bremskraftverstärkung über die zweite Druckversorgungseinheit DV2;
   o Fehlerfall 5 - Ausfall der ersten Druckversorgungseinheit DV1 und des ersten Bremskreises BK1 oder des zweiten Bremskreises BK2: Verzögerung durch Bremskraftverstärkung über die zweite Druckversorgungseinheit DV2 in einem der Bremskreise BK1, BK2, ggf. unterstützt durch einen Fahrzeugelektromotor an einer Achse;
   o Fehlerfall 6 - Ausfall der ersten Druckversorgungseinheit DV1 und der zweiten Druckversorgungseinheit DV2: Bremsen durch Hauptbremszylinder an Vorderachse VA und optional durch Fahrzeugelektromotor TM1 an der Hinterachse HA;
   o Fehlerfall 7 - Ausfall des Bordnetzes: Bremsen durch dritte Druckversorgungseinheit DV3 ggf. an Vorderachse VA und Hinterachse HA;
- Elektronische Bremskraftverteilung (EBV) bei Ausfall des Bremsmoduls BM2 durch Druckerzeugung im ersten Bremskreis BK1 über zweite Druckversorgungseinheit DV2 und Druckerzeugung im zweiten Bremskreis BK2 über die erste Druckversorgungseinheit DV1 bei geschlossenem ersten Trennventil BP1 und Steuerung der ersten Druckversorgungseinheit DV1 über Sensorik der dritten Druckversorgungseinheit DV3. Hierzu ist eine S/W-Bremskreisaufteilung erforderlich, d. h. am ersten Bremskreis BK1 sind die Räder der Vorderachse VA, am zweiten Bremskreis BK2 die Räder der Hinterachse HA angeschlossen;
- Steuerung des Lüftspiels zwischen Bremsbelägen und Scheibenbremse;
- 4-Kanal-ABS-Betrieb und/oder einer Giermomentregelung bei Ansteuerung der Ventile des zweiten Bremsmoduls BM2
- 1-Kanal-ABS-Betrieb oder Realisierung einer automatisierten Stotterbremse.

Fig. 8 zeigt eine alternative Ausgestaltung des ersten Bremsmoduls BM1 gemäß Fig. 7. Im Unterschied zu dem Ausführungsbeispiel gemäß Fig. 7 ist in Fig. 8 in der zweiten Hydraulikleitung HL2 ein zweites Trennventil TVBK2 vorgesehen. Dieses zweite Trennventil TVBK2 ermöglicht es, den zweiten Bremskreis BK2 von der ersten Druckversorgungseinheit DV1 hydraulisch zu entkoppeln. Somit kann die erste Druckversorgungseinheit DV1 selektiv Druckmittel im ersten Bremskreis BK1 oder im zweiten Bremskreis BK2 oder in beiden Bremskreisen bereitstellen. Bei der Detektion eines Volumenverlusts im zweiten Bremskreis BK2 kann dieser abgekoppelt werden.

Weiterhin unterscheidet sich das Ausführungsbeispiel gemäß Fig. 8 darin, dass in der ersten Hydraulikleitung HL1 zwischen dem ersten Trennventil BP1 und dem ersten Anschlusspunkt A1 für den ersten Bremskreis BK1 ein drittes Trennventil BP2 vorgesehen ist. Vorzugsweise ist dieses dritte Trennventil BP2 so angeordnet, dass die dritte Hydraulikleitung HL3 in einer hydraulischen Verbindung zwischen dem ersten Trennventil BP1 und dem dritten Trennventil BP2 in die erste Hydraulikleitung HL1 einmündet. Das dritte Trennventil BP2 ermöglicht es, den ersten Bremskreis BK1 hydraulisch sowohl von der ersten Druckversorgungseinheit DV1 sowie von der dritten Druckversorgungseinheit DV3 abzukoppeln. Somit ist es möglich, bei ausgefallener erster Druckversorgungseinheit DV1 Druckmittel ausgehend von der dritten Druckversorgungseinheit DV3 über das Einspeiseventil 69, das erste Trennventil BP1 und das zweite Trennventil TVBK2 in den zweiten Bremskreis BK2 einzubringen. Wenn das dritte Trennventil BP2 verschlossen ist, wird kein Druckmittel in den ersten Bremskreis BK1 abgegeben.

Mit dem Ausführungsbeispiel nach Fig. 8 können folgende sicherheitsrelevante Redundanzen realisiert werden:
- Sicherstellung einer ausreichenden Bremswirkung bei Ausfall der einen oder der mehreren Druckversorgungseinheiten,
   o Fehlerfälle 1-7: siehe Ausführungsbeispiel gemäß Fig. 7;
   o Fehlerfall 8: Ausfall des Einspeiseventils 69 (z. B. undicht) oder Ausfall der elektrischen Ansteuerung: Verschluss der dritten Hydraulikleitung HL3 durch die Trennventile BP1 und BP2, so
   o sodass der Wegsimulator 28 voll wirksam ist; erste Druckversorgungseinheit DV1 stellt in Bremskreis BK2 und/oder zweites Bremsmoduls BM2 stellt in beiden Bremskreisen BK1 und BK2 Raddrücke ein,
   o Weiterer Freiheitsgrad: wahlweises Einspeisen des Druckes des Hauptbremszylinders 22 in Bremskreis BK1 oder BK2 bei Ausfall eines Bremskreises BK1, BK2;
- Sicherstellung einer 4-Kanal-ABS-Regelung und/oder einer Giermomentregelung bei Ansteuerung der Ventile des zweiten Bremsmoduls BM2;
- 2-Kanal-ABS-Betrieb nach dem Select-Low- und Select-High-Verfahren oder 1-Kanal-ABS nach dem Select-low-Verfahren mit Raddrehzahlsensoren;
- Elektronische Bremskraftverteilung (EBV) bei Ausfall des zweiten Bremsmoduls BM2 (ESP-Einheit) durch Druckerzeugung in Bremskreis BK1 über die dritten Druckversorgungseinheit DV3 und Druckerzeugung im Bremskreis BK2 über die erste Druckversorgungseinheit DV1 bei geschlossenem ersten Trennventil BP1 und Steuerung der Druckversorgung über die Sensorik der dritten Druckversorgungseinheit DV3. Hierzu ist S/W-Bremskreisverteilung notwendig und die Bremskraftverteilung in die Bremskreise wird über die Trennventile BP1, BP2 und TVBK2 gesteuert. Erfindungsgemäß kann der Kolben der ersten Druckversorgungseinheit DV1 in Vor- und Rückhubbewegung zur Anlegung eines geeigneten Druckes gesteuert werden. Optional kann eine Druckeinstellung über eine PWM-Steuerung der Ventile, insbesondere der Trennventile erfolgen;
- Lüftspielsteuerung ist in Ausführungsbeispiel nach Fig. 7 bereits ausgeführt. Das Ausführungsbeispiel nach Fig. 8 bietet das zusätzliche Potential, das ungleiche Lüftspiel in den Radbremsen RB1, RB2, RB3, RB4 der Bremskreise BK1, BK2 durch entsprechende Vorsteuerung vor dem Bremskraftverstärkerbetrieb durch sequenzielle Öffnung der Trennventile BP1, TVBK2 auszugleichen. Alternativ kann auch der PWM-Betrieb eingesetzt werden, sodass sich unterschiedliche Durchflussquerschnitte zu den Bremskreisen BK1, BK2 einstellen und damit simultan das ungleiche Lüftspiel ausgeglichen werden kann. Hier eignet sich eine S/W-Bremskreisaufteilung. Dieses Verfahren ist einfach möglich, weil die Bremskreistrennventile Bestandteil des zweiten Bremsmoduls BM2 sind und ohne Zeitverzug und Fehleranfälligkeit (z. B. Nutzung einer Schnittstelle zwischen erstem und zweitem Bremsmodul BM1, BM2) umgesetzt werden können. So kann z. B. die Bremsanlage derart gestaltet werden, dass an der Vorderachse an den Bremsbelägen kein Lüftspiel vorgesehen ist und an der Hinterachse ein Lüftspiel vorgesehen ist. So führt auch ein Ausfall der ersten Druckversorgungseinheit DV1 nicht zu einem Zeitverzug der Bremsung, wenn Druck durch die Betätigungseinheit erzeugt wird und erfindungsgemäß auf die Radbremsen RB1, RB2, RB3, RB4 der Vorderachse VA wirkt. Zudem kann mit der Vorderachse VA eine größere Bremswirkung erzeugt werden.
Fig. 9 zeigt ein weiteres Ausführungsbeispiel. Hierbei ist das erste und zweite Bremsmodul BM1, BM2 in einem Gehäuse zusammengefasst. Das entsprechende Modul verfügt, wie auch die vorherbeschriebenen Ausführungsbeispiele, über einen Vorratsbehälter 40 sowie den Niveausensor NST und den Schwimmer NS. In der Ausführungsform sind lediglich eine erste Druckversorgungseinheit DV1 sowie eine zweite Druckversorgungseinheit DV2 vorgesehen. Die erste Druckversorgungseinheit DV1 ist im Wesentlichen identisch zu der ersten Druckversorgungseinheit DV1 aus den Ausführungsbeispielen gemäß Fig. 7 und 8.

Alternativ zur dargestellten Ausführung kann auch eine Rotationspumpe, insbesondere eine Zahnradpumpe oder einkreisige Kolbenpumpe mit einen oder mehreren über einen Exzenter angetriebenen Kolben eingesetzt werden. Wird eine Zahnradpumpe eingesetzt, ist ein Druckabbau über die Zahnradpumpe möglich, bei einer Kolbenpumpe kann kein Druckabbau über die Rotationspumpe erfolgen. Bei der zweiten Druckversorgungseinheit DV2 handelt es sich um eine einkreisige Pumpe, insbesondere eine Kolbenpumpe mit einen oder mehreren Exzentern, die über die erste Hydraulikleitung HL1 mit dem ersten Bremskreis BK1 verbunden ist. An dem ersten Bremskreis BK1 hängen bidirektionale Schaltventile SV3 und SV4, denen jeweils die Radbremsen RB3 und RB4 zugeordnet sind. An dem zweiten Bremskreis BK2 hängen bidirektionale Schaltventile SV1 und SV2, denen jeweils die Radbremsen RB1 und RB2 zugeordnet sind. Die bidirektionalen Schaltventile SV1-SV4 dienen jeweils zum Druckaufbau und Druckabbau in der ihnen zugeordneten Radbremse RB1-RB4. Die erste Druckversorgungseinheit DV1 steht optional über das vierte Trennventil 74 mit der zweiten Hydraulikleitung HL2 in Verbindung, die den zweiten Bremskreis BK2 versorgt. Die erste Hydraulikleitung HL1 und die zweite Hydraulikleitung HL2 lassen sich über die Trennventile BP1 und BP2 miteinander verbinden. Insofern ist es möglich, dass die erste Druckversorgungseinheit DV1 sowohl in dem ersten Bremskreis BK1 wie auch in dem zweiten Bremskreis BK2 Druckmittel bereitstellt. Die erste Druckversorgungseinheit DV1 kann auch dafür genutzt werden, aktiv Fluid aus den Radbremsen RB1-RB4 durch Rückstellen des Kolbens bzw. Änderung der Drehrichtung der Zahnradpumpe Druck abzubauen. Bei geschlossenem Trennventil BP1 und/oder BP2 stellt die erste Druckversorgungseinheit DV1 ausschließlich in den zweiten Bremskreis BK2 den Druck ein.

Dementsprechend kann beispielsweise bei geschlossenem dritten Trennventil 74 die zweite Druckversorgungseinheit DV2 aufgrund der Trennventile BP1 und BP2 unabhängig von der ersten Druckversorgungseinheit DV1 in beiden Bremskreisen BK1 und BK2 einen vorgegebenen Druck einstellen. Diese Konfiguration ermöglicht es, dass bei einem Ausfall der ersten Druckversorgungseinheit DV1 die Funktionen, zumindest teilweise, von der zweiten Druckversorgungseinheit DV2 übernommen werden kann. Umgekehrt können beim Ausfall der zweiten Druckversorgungseinheit DV2 die Funktionen, zumindest teilweise, durch die erste Druckversorgungseinheit DV1 wahrgenommen werden.

Ein weiterer Aspekt des Ausführungsbeispiels gemäß Fig. 9 ist es, dass ein zentrales Auslassventil ZAV vorgesehen ist. Dieses zentrale Auslassventil ZAV steht mit einer Öffnung mit dem Vorratsbehälter 40 in fluider Verbindung. Die andere Öffnung mündet in einen Hydraulikleitungsabschnitt zwischen dem Trennventil BP1 und dem Trennventil BP2. Aufgrund der hydraulischen Anordnung ist es möglich, dass das zentrale Auslassventil ZAV zum Ablass von Druck aus jeder der Radbremsen RB1 - RB4 verwendet wird. Ähnlich wie bei den zuvor beschriebenen Ausführungsbeispielen ergeben sich zahlreiche Redundanzen, die auch die Ausfälle von einem oder mehreren der beschriebenen Ventile abdecken. So kann bei Ausfall eines Radkreises durch Schließen des Schaltventiles der Radkreis abgekoppelt werden und das System noch 3-kreisig betrieben werden. Bei Bremskreisausfall wird der entsprechende Bremskreis über das Trennventil BP1 oder BP2 abgetrennt und nur ein Bremskreis wird noch mit einer Druckversorgung betrieben, wobei der Druckaufbau über die aktive Druckversorgung erfolgt und der Druckaufbau über ZAV-Ventil oder die Druckversorgung in Falle der Ausführung als Kolben-Zylinder-Einheit oder Zahnradpumpe.

Auch das Ausführungsbeispiel gemäß Fig. 9 verfügt über ein Bremsmodul-Steuergerät ECUBM1, das über einen redundant ausgeführten CAN-Bus mit der Primärsteuereinheit M-ECU verbunden ist.

Fig. 10 bis 13 zeigen Prinzipschaltbilder eines zweiten Bremsmoduls BM2, wie es beispielsweise in Verbindung mit dem Ausführungsbeispiel nach Fig. 8 eingesetzt werden kann. Neben der Pumpe P mit dem Motor 91 ("M") sind die Ventile HSV1 und HSV2, USV1 und USV2, den Radbremsen RB1 - RB4 zugeordneten Einlass- und Auslassventilen EV1 - EV4 bzw. AV1 - AV4, und je einer Speicherkammer SpK pro Bremskreis BK1, BK2 vorgesehen.

Ein Aspekt der Erfindung besteht darin, dass das erste Bremsmodul-Steuergerät ECUBM1 über mindestens eine kommunikative Verbindung (vgl. CAN-Bus CAN) mit dem zweiten Bremsmodul-Steuergerät ECUBM2 des zweiten Bremsmoduls BM2 in Verbindung steht und zur Erzielung von Sicherheitsaspekten zumindest die Einlassventile EV1 bis EV4 durch das erste Bremsmodul-Steuergerät ECUBM1 steuerbar sind.

Ein (weiterer) Aspekt der Erfindung besteht in dem radindividuellen Druckabbau unter Verwendung der Auslassventile AV1 bis AV4 und der HSV-Ventile der ESP-Einheit.

In Fig. 10 ist ein Prinzipschaltbild des zweiten Bremsmoduls BM2 während des Druckabbaus in einem ersten Fehlerfall dargestellt. Unter dem ersten Fehlerfall kann hierbei verstanden werden, dass die zweite Druckversorgungseinheit DV2 ausgefallen ist. In diesem Fall erfolgt ein Druckabbau zu Regelungszwecken über die erste Druckversorgungseinheit DV1. Hierfür wird der Kolben der ersten Druckversorgungseinheit DV1 zurückbewegt (in der Zeichenebene nach rechts, durch einen Pfeil gekennzeichnet) und die stromlos-geschlossenen Auslassventile AV4 und AV3 sowie das stromlos-geschlossene Trennventil HSV2 werden geöffnet. Die in diesem Zustand für den Volumenfluss geöffneten Ventile sind zur Verdeutlichung des geöffneten Zustands in Fig. 10 jeweils mit einem Stern ("*") versehen. Nicht explizit ausgeführt ist der Zustand der anderen Magnetventile. So sind z. B. zumindest die Einlassventile EV1-EV4 bei Druckabbau durch aktive Bestromung geschlossen. Im Ausführungsbeispiel sind die Trennventilen HSV1, HSV2 für den Druckabbau in der skizzierten Form als bidirektionale Schaltventile SV1-SV4 ausgeführt.

In Fig. 10 ist die Fließrichtung des Druckmittels von den Radbremsen zu der ersten Druckversorgungseinheit DV1 durch gestrichelte Pfeile visualisiert. Erfindungsgemäß werden die Trennventile HSV2 und HSV1 entgegen der typischen Nutzung in einem ESP-Fall bidirektional betrieben. Die Trennventile HSV1 und HSV2 werden im Normalbetrieb - während eines ESP-Falls - verwendet, um mittels der Pumpen P Fluid aus dem Vorratsbehälter 40 nachzufördern. Mit der gezeigten Konfiguration kann bei geschlossenen Trennventilen USV1 und USV2 im Normalbetrieb durch das Öffnen und Schließen von den Trennventilen HSV1 und HSV2 selektiv Druck aus den Radbremsen RB1 und RB2 bzw. RB3 und RB4 (nicht dargestellt) abgelassen werden. Eine radindividuelle Druckeinstellung kann durch ein entsprechendes Schalten der Auslassventile AV1 bis AV4 erfolgen Im ersten Fehlerfall erfolgt die Ansteuerung der Ventile, insbesondere der Trennventile USV1, USV2, HSV1, HSV2 und der Auslassventile AV1 bis AV4 durch das erste Bremsmodul-Steuergerät ECUBM1 und nicht wie im Normalfall durch das zweite Bremsmodul-Steuergerät ECUBM2.

Die Einlassventile EV1 bis EV4 sind beim Druckabbau geschlossen (durch Bestromung). Durch das Öffnen des Trennventils HSV2 wird eine hydraulische Verbindung zur ersten Druckversorgungseinheit DV1 unter Umgehung der (ausgefallenen) zweiten Druckversorgungseinheit DV2 ausgebildet.

Der in Fig. 10 beispielhaft für zwei Radbremsen RB3, RB4 dargestellte und erläuterte Druckabbau kann alternativ auch bremskreisindividuell oder radbremsindividuell in analoger Weise erfolgen. Die radbremskreisindividuelle Regelung wird für den 4-Kanal-ABS-Betrieb sowie ggf. für Giermomenteingriffe (auch als Giermoment-Regelung(en) bezeichnet) eingesetzt.

Während dieser Regelung wird bevorzugt mittels des Druckgebers p/U (im Ausführungsbeispiel nahe des Ventils USV1) ein Druck erfasst, sodass zu jedem Zeitpunkt eine Druckinformation zur Druckabbauregelung vorliegt.

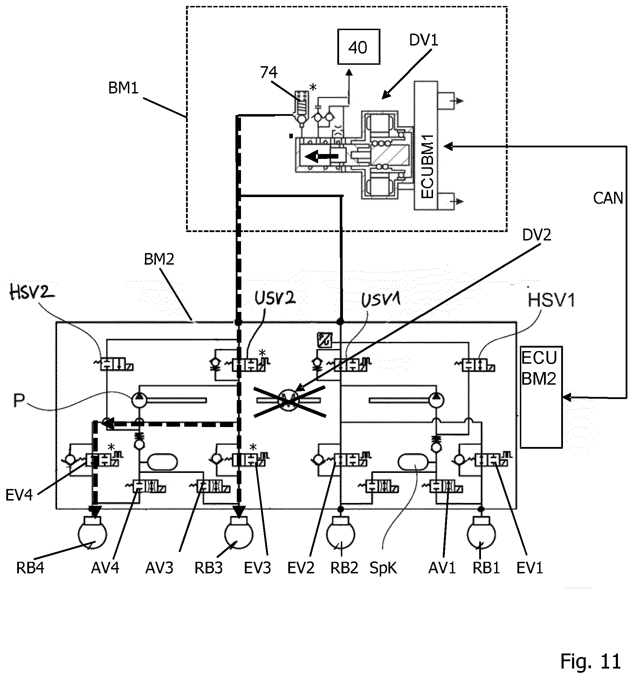

Ein Druckaufbau im ersten Fehlerfall ist beispielhaft im Prinzipschaltbild gemäß der Fig. 11 dargestellt. In diesem Fall steuert das zweite Bremsmodul-Steuergerät ECUBM2 die Einlassventile EV1 bis EV4 der zweiten Druckversorgungseinheit DV2 wie im Normalbetrieb. Die Auslassventile AV1 bis AV4 sind beim Druckaufbau (stromlos-)geschlossen. Zusätzlich wird während des Druckaufbaus das Ventil USV2 (stromlos) offengehalten, während die Ventile HSV1, HSV2 (stromlos-)geschlossen verbleiben. In Fig. 11 ist beispielhaft der Druckaufbau in den zwei Radbremsen RB3, RB4 gezeigt. Der anhand von Fig. 11 beispielhaft für zwei Radbremsen RB3, RB4 dargestellte und erläuterte Druckaufbau kann alternativ auch bremskreisindividuell oder radbremsindividuell in analoger Weise erfolgen, wodurch ein radindividueller Druckaufbau und ggf. auch ein Giermomenteingriff erfolgen kann.

Das Trennventil 74, sofern vorgesehen, welches die erste Druckversorgungseinheit DV1 von den Bremskreisen BK1, BK2 trennt, wird beim Druckaufbau wie auch beim Druckabbau geöffnet betrieben. Die erste Druckversorgungseinheit DV1 fördert Druckmittel durch die Hydraulikleitung in die Radbremsen RB3, RB4. Auch in diesem Ausführungsbeispiel wird der Druckgeber p/U, welcher gemäß Fig. 6 im zweiten Bremskreis BK2 angeordnet ist, zur Erfassung von Druckinformationen herangezogen. Auch bei Druckaufbau wird die Steuerung der Ventile des zweiten Bremsmoduls BM2 über die kommunikative Verbindung, z. B. CAN-Bus CAN, von dem ersten Bremsmodul-Steuergerät ECUBM1 durchgeführt.

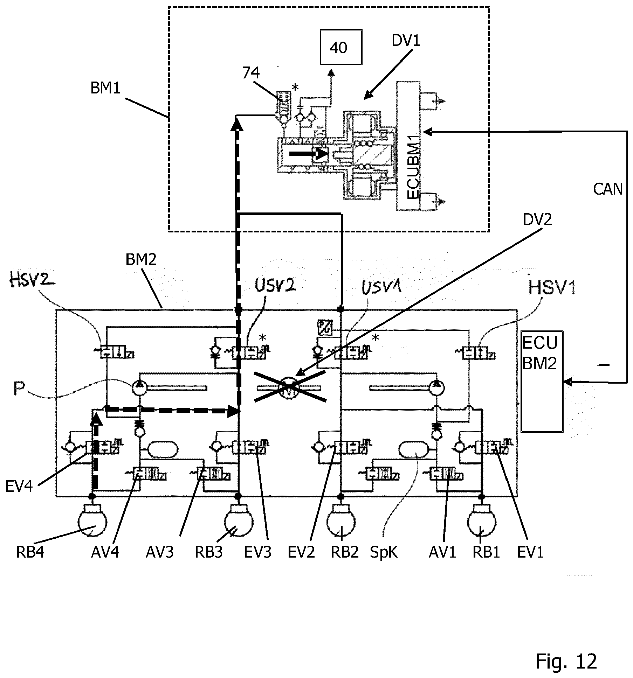

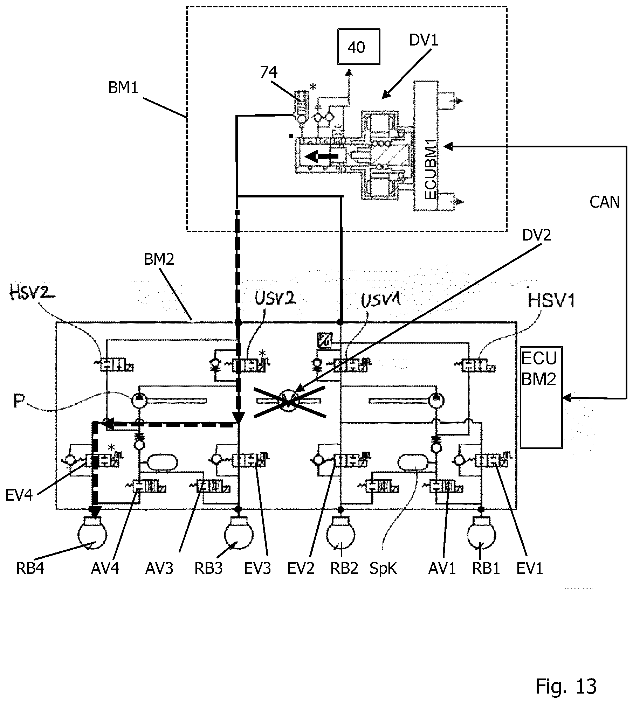

In den Fig. 12 und 13 ist jeweils ein Prinzipschaltbild der dritten Druckversorgungseinheit DV3 (ESP-Einheit) während eines Druckabbaus (vgl. Fig. 12) beziehungsweise eines Druckaufbaus (vgl. Fig. 13) im ersten Fehlerfall bei einer Giermomentregelung gezeigt. Im Grunde erfolgt hierbei die Regelung ähnlich dem im ersten Fehlerfall ebenfalls möglichen 4-Kanal-ABS. Bei der Giermomentregelung erfolgt jedoch bevorzugt - im Gegenteil zur 4-Kanal-ABS-Regelung - sowohl der Druckabbau als auch der Druckaufbau über die Einlassventile EV1-EV4 sowie die USV-Ventile. Sowohl in Fig. 12 als auch in Fig. 13 sind für den Durchfluss relevante, geöffnete Ventile jeweils mit einem Sternchen ("*") versehen. Die Einlassventile EV2, EV3, EV4 sind beim Druckabbau für den Giermomenteingriff durch aktive Bestromung geschlossen. Sofern es sich bei den Ventilen um mittels eines PWM-Signals ansteuerbare Ventile handelt, kann im Sinne dieser Anmeldung unter geöffnet auch verstanden werden, dass diese Ventile unter Ansteuerung mit einem PWM-Signal angesteuert werden, sodass sich ein gewünschter Öffnungsquerschnitt einstellt. Somit ist durch die Ansteuerung der Ventile mittels eines PWM-Signals eine Durchflussmenge durch das jeweilige Ventil steuerbar. Konkret werden in den Fig. 12 und 13 die Einlassventile EV1-EV4 und die Ventile USV1, USV2 mittels eines PWM-Signals ansteuerbar. Somit ist in den nachfolgend beschriebenen Situationen eine Durchflussmenge durch diese Ventile regelbar bzw. steuerbar.

In Fig. 13 ist exemplarisch eine radselektive Giermomentregelung bzw. ein radselektiver Giermomenteingriff durch Druckaufbau in der Radbremse RB4 gezeigt. Hierzu wird das der jeweiligen Radbremse, hier der Radbremse RB4, zugeordnete Einlassventil EV1 sowie das dem jeweiligen Bremskreis, hier dem ersten Bremskreis BK2, zugeordnete Trennventil USV2 mit Druckmittel durchströmt. Die Ventile müssen in dieser Ausführungsform nicht aktiv angesteuert werden, da sie passiv im stromlos offenen Zustand offen sind und bidirektional einen Volumenfluss des Druckmittels zulassen. Für die selektive Druckerzeugung in einer Radbremse RB4 werden die anderen Einlassventile EV1-EV3, über die kein Druck aufgebaut werden soll (RB1-RB3) derart angesteuert, dass die Magnetventile vom offenen Zustand in den bestromt geschlossenen Zustand übergeführt werden. Unter Ansteuern bei einem stromlos offenen Ventil in diesem Sinne kann verstanden werden, dass die Einlassventile EV1-EV3 geschlossen, also nicht Druckmittel durchleitend, geschaltet werden. Ebenfalls sind die HSV-Ventile für die selektive Druckerzeugung in der Radbremse RB4 beim beschriebenen Giermomenteingriff geschlossen, also nicht Druckmittel durchleitend geschaltet.

Somit erfolgt eine Druckbeaufschlagung von der ersten Druckversorgungseinheit DV1 über das Trennventil USV2 und das Einlassventil EV4 ausschließlich in der Radbremse RB4 (durch einen Pfeil schematisch angedeutet).

Entsprechend dem beschriebenen Vorgang für Radbremse RB4 kann ein Giermoment in mehreren Radbremsen RB1, RB2, RB3, RB4 erzeugt werden. Dazu werden jeweils diejenigen Einlassventile EV1-EV4 der Radbremsen RB1, RB2, RB3, RB4 geschlossen, in denen kein Druck aufgebaut werden soll. Mit dieser Erweiterung kann ein Giermoment in z. B. zwei Radbremsen RB1, RB2, RB3, RB4 einer Fahrzeugseite gleichzeitig erzeugt werden.

Ein Druckabbau, wie beispielsweise in Fig. 12 gezeigt, erfolgt in analoger, jedoch umgekehrter Weise, wobei eine Rückführung von Druckmittel von der Radbremse RB4 über das Einlassventil EV4 und das Trennventil USV2 zur ersten Druckversorgungseinheit DV1 vorgenommen wird. Analog erfolgt dann der Druckabbau auch bei Giermomenteingriffen in mehreren Radbremsen. Auch hier wird vorzugsweise das Multiplexverfahren eingesetzt.

Ergänzend können in einer Ausführungsform auch mehrere, insbesondere alle vier Radbremsen RB1, RB2, RB3, RB4 individuell und radselektiv in analoger Weise angesteuert werden und somit eine radselektive Giermomentregelung implementiert werden.

Zusammenfassend ergeben sich für die relevanten Ventile des zweiten Bremsmoduls BM2 für den Druckabbau gemäß Fig. 12 folgende Zustände:
HSV1: geschlossen (unbestromt)
HSV2: geschlossen (unbestromt)
EV4: geöffnet (unbestromt geöffnet)
USV1: geschlossen (bestromt geschlossen)
EV1-EV3: geschlossen (bestromt)
Alle übrigen Ventile im hydraulischen, insbesondere unbestromten Ausgangszustand

In den Ausführungsbeispielen gemäß den Fig. 10 bis 13 ist zur Illustration ein sehr einfach ausgestaltetes erstes Bremsmodul BM1 verwendet. Erfindungsgemäß kann das beschriebene zweite Bremsmodul BM2 auch in Verbindung mit den ersten Bremsmodulen BM1 verwendet werden, wie sie anhand der Fig. 7, 8 erläutert wurden. Entsprechendes gilt für die beschriebenen Verfahren zum Druckauf- und Druckabbau für einen Giermomenteingriff und/oder die Bremsung des Fahrzeugs.

Der erfindungsgemäße Aufbau mit der Primärsteuereinheit M-ECU und dem beschriebenen Fahrdynamiksystem FDS mit Bremsmodulen BM1, BM2, der Servolenkung EPS und den Fahrzeugelektromotoren TM1, TM2 hat den Vorteil, dass das gesamte Fahrzeug in der Fahrdynamik und Effizienz (Rekuperation von Bremsenergie, reibungsfreie Bremse) mit sehr wenigen Bauteilen optimiert werden kann. Ferner können Standardbauteile, die in großer Stückzahl und zu niedrigen Kosten produziert werden, eingesetzt werden. Zudem wird eine dreifache Redundanz durch Softwarelösungen und einfache Modifikationen (z. B. 2x3 Phasenauslegung, externer Zugriff auf die Magnetventile) erreicht oder kann stufenweise von einer Zweifachredundanz auf eine Dreifachredundanz erweitert werden.

Automobilhersteller können ggf. in Zusammenarbeit mit den Bremssystem- und Lenksystemherstellern umfangreiche Fahrdynamikfunktionen implementieren und eigenständig applizieren und optimieren. Zudem kann in einem Gesamtsystem Brake-by-Wire sowie Steer-by-Wire mit nur sehr wenigen Baueinheiten und einer smarten Redundanz realisiert werden.

In einer Ausbaustufe können OEMs direkt unabhängig vom Modulhersteller die Bremsregelung, die ein wesentlicher Bestandteil der Fahrdynamikregelung mit Fahrzeugelektromotoren TM1, TM2 ist, in die Primärsteuereinheit M-ECU integrieren und die Kontrollebene der Bremsmodul-Steuergeräte ECUBM1, ECUBM2 auflösen. In diesem Fall ist die Bremsregelung mit Rekuperation und elektrischer Bremskraftverstellung sowie die elektrische Servolenkung EPS nur ein Softwaremodul bzw. eine Domäne in der Primärsteuereinheit M-ECU.

Mit dem Fahrdynamiksystem FDS können die in der Fig. 14 ausgeführten Redundanzebenen erreicht werden:
- Primäre Steuerung (Normalbetrieb):
   o Achsindividuelle Bremskraftverstärkung und elektronische Bremskraftverteilung (e-BKV und EBV) werden durch das erste Bremsmodul BM1 geregelt. Damit kann achsindividuell das Bremsmoment verteilt werden und auch mit den Fahrzeugelektromotoren TM1, TM2 an beiden Achsen VA, HA gleichzeitig Bremsenergie rekuperiert werden.
   ∘ ABS/ESP-Reglung wird durch das Bremsmodul BM2 (ESP-Einheit) durchgeführt.
   ∘ Die Lenkung wird durch die Servolenkung ESP, die mit einer 2x3 Phasen-Wicklung ausgestattet ist, durchgeführt. Die Lenkung wird durch Giermomenteingriffe von dem zweiten Bremsmodul BM2 vorzugsweise unterstützt. Bei dynamischer Fahrt führt das zur Verbesserung der Agilität.
   ∘ Stillstandbremse (sog "Hill-Hold") wird durch beispielsweise von dem ersten Bremsmodul BM1 durchgeführt. Die Druckversorgungseinheit DV1 kann eine sehr präzise und achsindividuelle Druckregelung (PPC-Kolbensteuerung) in den Radbremsen RB1 - RB4 realisieren. Weitere Komponenten, insbesondere Elektromotoren, müssen nicht vorgesehen werden.
- Sekundäre Steuerung bei Teilausfall (Einfachfehler)
   ∘ E-BKV- und EBV-Funktion werden bei Ausfall des ersten Bremsmoduls BM1 durch das zweite Bremsmodul BM2 ohne funktionale Einschränkungen übernommen.
   ∘ ABS- und ESP-Funktion werden bei Ausfall des Antriebes bzw. der Pumpe des zweiten Bremsmoduls BM2 durch das erste Bremsmodul BM1 übernommen. Die Funktion kann voll aufrechterhalten werden, indem die Ventile des zweiten Bremsmoduls über eine Schnittstelle angesteuert werden.
   ∘ Bei Teilausfall der elektrischen Servolenkung EPS (z. B. eines Dreiphasenstranges) wird die elektrische Servolenkung EPS nur noch mit einem Strang betrieben und kann das Fahrzeug mit eingeschränkter Dynamik noch lenken. Die Lenkung wird in diesem Fall durch radindividuelle Bremsdrücke seitens des ersten Bremsmoduls BM1 unterstützt. Alternativ kann eine Unterstützung durch das zweite Bremsmodul BM2 erfolgen. Die Unterstützung durch das erste Bremsmodul BM1 ist aber bevorzugt, weil der Antriebsmotor des ersten Bremsmoduls BM1 eine höhere Dynamik und Leistung aufweist, die Drucksteuerung sehr präzise ist und daher Giermomenteingriffe mit hoher Präzision und Dynamik eingebracht werden können.
   ∘ Stillstandbremse (sog. "Hill-Hold") wird bei einem Ausfall des ersten Bremsmoduls BM1 durch das zweite Bremsmodul BM2 durchgeführt.
- Tertiäre Steuerung bei Komplettausfall eines Moduls (Doppelfehler oder Mehrfachfehler)
   ∘ E-BKV- und EBV-Funktion werden von dem ersten Bremsmodul BM1 durchgeführt, deren Motor vorzugsweise vergleichbar mit der elektrischen Servolenkung ESP mit 2x3 Strängen redundant ausgeführt ist. Die elektrische Bremskraftverteilung wird wegen der geringeren Dynamik dann durch die Bremswirkung mindestens eines Fahrzeugelektromotors TM1, TM2 unterstützt.
   ∘ ABS- und ESP-Funktion werden bei Ausfall des Antriebes bzw. der Pumpe des zweiten Bremsmoduls BM2 und auch eines Dreiphasenstranges des EC-Motors des zweiten Bremsmoduls BM1 durch das erste Bremsmodul BM1 aufrechterhalten werden. Die radindividuelle Funktion kann voll aufrechterhalten werden, indem die Ventile des ersten Bremsmoduls BM1 über eine Schnittstelle angesteuert werden. Aufgrund der geringen Leistung des Antriebsmotors im 1x3 Phasenbetrieb kann die ABS-Regelung nur bis zum halben Auslegungsdruck der Druckversorgung erfolgen. Fällt auch der Zugriff auf die Ventile des zweiten Bremsmoduls BM2 aus, wird das Fahrzeug mit einer automatisierten Stotterbremse oder im 1-Kanal oder 2-Kanal ABS-Betrieb betrieben.
   o Bei Komplettausfall der elektrischen Servolenkung EPS (z. B. eines Dreiphasenstranges) wird die Lenkung in diesem Fall durch radindividuelle Bremsdrücke unter Verwendung des ersten Bremsmoduls BM1 durchgeführt. Hierzu wird ein Giermoment an einem oder mehreren Rädern R1-R4 erzeugt
   o Stillstandbremse (sog. "Hill-Hold") wird durch das erste Bremsmodul BM1 im 1x3 Phasenbetrieb durchgeführt und mindestens einer der Fahrzeugelektromotoren TM1, TM2 für die Stillstandsbremsfunktion unterstützend genutzt.

In einigen der vorhergehenden Ausführungsbeispielen wurden mehrere Fahrzeugelektromotoren TM1, TM2 genutzt. Erfindungsgemäß kann insgesamt nur ein Fahrzeugelektromotor TM1 verwendet werden.

In einigen Ausführungsbeispielen wurden mehrere Bremsmodul-Steuergeräte zur Implementierung der beschriebenen Funktionen verwendet. Die Implementierung der Funktionen kann aber auch mit nur einem Bremsmodul-Steuergerät erfolgen.

In den beschriebenen Ausführungsbeispielen und Ausführungsformen (vgl. auch Anspruchswortlaut) wurden die erste Druckversorgungseinheit bzw. Druckversorgungseinrichtung durchgängig in Verbindung mit dem Bezugszeichen "DV1" und die zweite Druckversorgungseinheit bzw. Druckversorgungseinrichtung in Verbindung mit dem Bezugszeichen "DV2" verwendet. Dies soll jedoch die technischen Lehren, die hinsichtlich der ersten und/oder zweiten Druckversorgungseinheit erläutert wurden nicht auf die jeweilige Druckversorgungseinheit beschränken. Erfindungsgemäß können Lehren, die in Verbindung mit der ersten Druckversorgungseinheit erläutert wurden auch ohne Weiteres auf die zweite Druckversorgungseinheit angewandt werden. Entsprechendes gilt für Lehren, die in Verbindung mit der zweiten Druckversorgungseinheit erläutert wurden und sich ohne Weiteres auf die zweite Druckversorgungseinheit anwenden lassen.

So kann beispielsweise der erste Fehlerfall, insbesondere in Verbindung mit dem Ausführungsbeispiel gemäß Fig. 9, einen Ausfall der ersten Druckversorgungseinrichtung DV1 bezeichnen, wobei das Fahrdynamiksystem dazu ausgebildet ist, im ersten Fehlerfall zur Bereitstellung eines Giermomenteingriffs und/oder einer Lenkunterstützung mittels der zweiten Druckversorgungseinrichtung DV2 einen Druck in mindestens einer Radbremse RB1, RB2, RB3, RB4 aufzubauen. Ebenso kann, insbesondere mit Bezug auf Fig. 9, im zweiten Fehlerfall, insbesondere des zumindest teilweisen Ausfalls des Lenkaktuators (EPS), die erste Druckversorgungseinrichtung DV1 eingesetzt werden, um den Lenkbefehl, insbesondere durch ein Aufbauen von Druck in den Radbremsen RB1-RB4, umzusetzen.

Weiterhin kann, insbesondere in Bezug auf das Ausführungsbeispiel nach Fig. 9, bei einer Detektion eines zumindest teilweisen Ausfalls der ersten Druckversorgungseinheit DV1 das Fahrdynamiksystem dazu eingerichtet sein, eine ABS-Funktion und/oder einen Giermomenteingriff bereitzustellen, wobei ein (radindividuelles und/oder selektives) Einstellen der Drücke in den Radbremsen RB1, RB2, RB3, RB4 unter Ansteuerung mindestens eines der Bremsdruckeinstellventile AV1-AV4, EV1-EV4, SV1-SV4 und/oder von Trennventilen BP1, BP2 und der zweiten Druckversorgungseinheit DV2 erfolgt.

Weitere Aspekte der Erfindung sind die Folgenden:
1. Fahrdynamiksystem für ein Fahrzeug, umfassend:
   - eine Primärsteuereinheit (M-ECU) zur Erfassung und/oder Generierung von Lenkbefehlen und Bremsbefehlen;
   - ein Bremssystem mit einer ersten elektrohydraulischen Druckversorgungseinheit (DV1) und einer zweiten elektrohydraulischen Druckversorgungseinheit (DV2);
   - vier hydraulisch betätigbare Radbremsen (RB1-RB4), die Rädern (R1-R4) zugeordnet sind;
   - elektrisch betätigbare Bremsdruckeinstellventile (EV1-EV4, AV1-AV4, SV1-SV4);
   - ein insbesondere elektrischer Lenkaktuator (EPS) zur Betätigung mindestens einer Achse;

   wobei das Fahrdynamiksystem dazu ausgebildet ist,
   zur Umsetzung mindestens eines Lenkbefehls, insbesondere im Normalbetrieb, mindestens eine der Druckversorgungseinheiten (DV1, DV2) und den Lenkaktuator (EPS) und/oder
   zur Umsetzung eines Bremsbefehls im Normalbetrieb mindestens die zweite Druckversorgungseinheit (DV2) und zumindest die Bremsdruckeinstellventile (EV1-EV4, AV1-AV4, SV1-SV4) für eine radindividuelle Druckeinstellung und in einem (ersten) Fehlerfall mindestens die erste Druckversorgungseinheit
   (DV1) und zumindest die Bremsdruckeinstellventile (EV1-EV4, AV1-AV4, SV1-SV4) für eine radindividuelle Druckeinstellung anzusteuern.
2. Fahrdynamiksystem nach Aspekt 1,
   **dadurch gekennzeichnet**, dass
   eine Detektionseinheit zur Detektion mindestens des ersten Fehlerfalls, insbesondere eines zumindest teilweisen Ausfalls eines zweiten Bremsmoduls (BM2), insbesondere der zweiten Druckversorgungseinheit (DV2), und/oder des Lenkaktuators (EPS), wobei das Fahrdynamiksystem dazu ausgebildet ist, im ersten Fehlerfall zur Bereitstellung eines Giermomenteingriffs und/oder einer Lenkunterstützung mittels der ersten Druckversorgungseinheit (DV1) einen Druck in mindestens einer Radbremse (RB1, RB2, RB3, RB4) aufzubauen.
3. Fahrdynamiksystem nach einem der vorhergehenden Aspekte,
   **dadurch gekennzeichnet**, dass
   eine/die Detektionseinheit zur Detektion mindestens eines zweiten Fehlerfalls, insbesondere des zumindest teilweisen Ausfalls des Lenkaktuators (EPS) ausgebildet ist, wobei im zweiten Fehlerfall ein Lenkbefehl unter Verwendung der zweiten Druckversorgungseinheit (DV2), insbesondere durch ein Aufbauen eines Drucks in den Radbremsen (RB1, RB2, RB3, RB4) auf einer Seite des Fahrzeugs, umgesetzt wird.
4. Fahrdynamiksystem nach einem der vorhergehenden Aspekte, insbesondere nach Aspekt 2,
   **dadurch gekennzeichnet**, dass
   ein/das erste Bremsmodul (BM1) mit der ersten Druckversorgungseinheit (DV1) dazu eingerichtet ist, zumindest einen ersten Bremskreis (BK1) über einen ersten Anschlusspunkt (A1) und zumindest einen zweiten Bremskreis (BK2) über einen zweiten Anschlusspunkt (A2) mit einem Druckmittel zu beaufschlagen, wobei
   - ein erstes Trennventil (BP1) des ersten Bremsmoduls (BM1) in einer ersten Hydraulikleitung (HL1) zwischen der ersten Druckversorgungseinheit (DV1) des ersten Bremsmoduls (BM1) und dem ersten Anschlusspunkt (A1) angeordnet ist und ein zweites Trennventil (TVBK2) in einer zweiten Hydraulikleitung (HL2) zwischen der ersten Druckversorgungseinheit (DV1) und dem zweiten Anschlusspunkt (A2) angeordnet ist,
      wobei das Bremssystem dazu ausgebildet ist,
   - einen dritten Fehlerfall, insbesondere einen Totalausfall eines/des zweiten Bremsmoduls (BM2) mit der zweiten Druckversorgungseinheit (DV2), zu detektieren,
   - im dritten Fehlerfall, die erste Druckversorgungseinheit (DV1) und das erste und zweite Trennventil (BP1, TVBK2) zu steuern, um zumindest eine bremskreisindividuelle Druckregelung in den zumindest zwei Bremskreisen (BK1, BK2) zu implementieren.
5. Fahrdynamiksystem nach einem der vorhergehenden Aspekte, insbesondere nach einem der Aspekte 1 bis 2,
   **dadurch gekennzeichnet**, dass
   die zweite Druckversorgungseinheit (DV2) über mindestens eine erste Hydraulikleitung (HL1) an einen ersten Bremskreis (BK1) und die erste Druckversorgungseinheit (DV1) über mindestens eine zweite Hydraulikleitung (HL2) an einen zweiten Bremskreis (BK2) angeschlossen ist, wobei die erste und die zweite Hydraulikleitung (HL1, HL2) über mindestens ein Trennventil (BP1, BP2) miteinander hydraulisch verbindbar und/oder entkoppelbar.
6. Fahrdynamiksystem nach einem der vorhergehenden Aspekte, insbesondere nach Aspekt 3.-,
   **dadurch gekennzeichnet**, dass
   die erste und die zweite Hydraulikleitung (HL1, HL2) über mindestens ein erstes und mindestens ein zweites Trennventil (BP1, TVBK2) miteinander hydraulisch verbindbar sind, wobei ein Hydraulikleitungsabschnitt zwischen dem ersten und dem zweiten Trennventil (BP1, TVBK2) über mindestens ein (zentrales) Auslassventil (ZAV) mit einem Vorratsbehälter (40) verbunden ist.
7. Fahrdynamiksystem nach einem der vorhergehenden Aspekte,
   **dadurch gekennzeichnet**, dass
   jeder Radbremse (RB1 - RB4) (genau) ein insbesondere bidirektionales Bremsdruckeinstellventil (SV1 bis SV4) für einen Druckaufbau und einen Druckabbau in der jeweiligen Radbremse (RB1 - RB4) zugeordnet ist.
8. Fahrdynamiksystem nach einem der vorhergehenden Aspekte,
   **dadurch gekennzeichnet**, dass
   die zweite Druckversorgungseinheit (DV2) eine Einkreis-Pumpe umfasst, die hydraulisch mit einem/dem Vorratsbehälter (40) verbunden ist, um Druckmittel in den ersten und/oder zweiten Bremskreis (BK1, BK2) zu fördern.
9. Fahrdynamiksystem nach einem der vorhergehenden Aspekte,
   **dadurch gekennzeichnet**, dass
   eine/die Detektionseinrichtung zur Detektion eines vierten Fehlerfalls, insbesondere des Ausfalls eines Bremskreises (BK1, BK2), und/oder eines fünften Fehlerfalls, insbesondere des Ausfalls einer Radbremse (RB1 - RB4), wobei das Fahrdynamiksystem dazu ausgebildet ist, in Reaktion auf die Detektion des vierten und/oder des fünften Fehlerfalls mindestens eines der Trennventile (BP1, TVBK2) und/oder mindestens eines der Bremsdruckeinstellventile (EV1-EV4, AV1-AV4, SV1-SV4) zu schließen, um den ausgefallenen Bremskreis und/oder die ausgefallene Radbremse (RB1-RB4) hydraulisch abzukuppeln.
10. Fahrdynamiksystem nach einem der vorhergehenden Aspekte,
   **dadurch gekennzeichnet**, dass
   der Lenkaktuator (EPS) mindestens einen elektromotorischen Antrieb mit redundanten Wicklungen und redundanter Steuerung umfasst, sodass bei einem Ausfall die Funktionalität des Lenkaktuators (EPS) zumindest teilweise mittels der redundanten Wicklungen und Steuerung aufrechterhaltbar ist und/oder
   die erste und/oder zweite Druckversorgungseinheit (DV1, DV2) mindestens einen elektromotorischen Antrieb (18) mit redundanten Wicklungen und redundanter Steuerung umfasst, sodass bei einem Ausfall ein Druckaufbau und/oder Druckabbau in den Radbremsen (RB1 - RB4) zumindest teilweise mittels der redundanten Wicklungen und Steuerung umsetzbar ist.
11. Fahrdynamiksystem nach einem der vorhergehenden Aspekte,
   **dadurch gekennzeichnet**, dass
   das Fahrdynamiksystem dazu ausgebildet ist, die Radbremsen (RB1 - RB4) zur Stillstandsbremsung mittels der ersten Druckversorgungseinheit (DV1) und/oder zweiten Druckversorgungseinheit (DV2) mit Druck zu beaufschlagen und/oder mindestens einen Fahrzeugelektromotor (TM1, TM2) für die Stillstandsbremsung anzusteuern.
12. Fahrdynamiksystem nach einem der vorhergehenden Aspekte, insbesondere nach Aspekt 11,
   **dadurch gekennzeichnet**, dass
   in einem (detektierten) sechsten Fehlerfall, insbesondere während eines zumindest teilweisen Ausfalls der ersten Druckversorgungseinheit (DV1) oder zweiten Druckversorgungseinheit (DV2), die jeweils andere Druckversorgungseinheit (DV1, DV2) Druck aufbaut und/oder mindestens einen der Fahrzeugelektromotoren (TM1, TM2) aktiviert, um die Stillstandsbremsung zu implementieren.
13. Fahrdynamiksystem nach einem der vorhergehenden Aspekte,
   **dadurch gekennzeichnet**, dass
   bei einer Detektion eines zumindest teilweisen Ausfalls der zweiten Druckversorgungseinheit (DV2) das Fahrdynamiksystem dazu eingerichtet ist, eine ABS-Funktion und/oder einen Giermomenteingriff bereitzustellen, wobei ein (radindividuelles und/oder selektives) Einstellen der Drücke in den Radbremsen (RB1, RB2, RB3, RB4) unter Ansteuerung mindestens eines der Bremsdruckeinstellventile (AV1-AV4, EV1-EV4, SV1-SV4) und/oder eines Trennventiles (USV1, USV2, HSV1, HSV2) des zweiten Bremsmoduls (BM2) und der ersten Druckversorgungseinheit (DV1) erfolgt.
14. Fahrdynamiksystem nach einem der vorhergehenden Aspekte,
   **dadurch gekennzeichnet**, dass
   das Fahrdynamiksystem dazu ausgebildet ist, für einen Druckabbau in mindestens einer der Radbremsen (RB1-RB4) eine der Druckversorgungseinheiten (DV1, DV2), insbesondere die erste Druckversorgungseinheit (DV1), anzusteuern, wobei vorzugsweise eine Ansteuerung derart erfolgt, dass ein Kolben der Druckversorgungseinheit (DV1) zurückgefahren wird.
15. Fahrdynamiksystem nach einem der vorhergehenden Aspekte,
   **gekennzeichnet** durch:
   - mindestens eine (kabelgebundene) Busverbindung zur kommunikativen Verbindung eines/des ersten Bremsmoduls (BM1), insbesondere eines Steuergeräts (ECUBM1) des ersten Bremsmoduls (BM1), und/oder des Lenkaktuators (EPS), insbesondere eines Steuergeräts des Lenkaktuators (EPS), mit der Primärsteuereinheit (M-ECU); und/oder
   - Sendeempfangseinheiten zur drahtlosen Kommunikationsverbindung des ersten Bremsmoduls (BM1), insbesondere des Steuergeräts (ECUBM1) des ersten Bremsmoduls (BM1), und/oder des Lenkaktuators (EPS), insbesondere des Steuergeräts des Lenkaktuators (EPS), mit der Primärsteuereinheit (M-ECU).
16. Fahrzeug, umfassend ein Fahrdynamiksystem nach einem der vorhergehenden Aspekte.
17. Fahrzeug nach Aspekt 3.-,
   umfassend:
   - eine Vorderachse (VA);
   - eine Hinterachse (HA), wobei Räder (R1, R2, R3, R4) an der Vorderachse (VA) und/oder an der Hinterachse (HA) über die Radbremsen (RB1, RB2, RB3, RB4) abbremsbar sind;
   - mindestens einen Fahrzeugelektromotor (TM1, TM2) zum Antreiben der Vorderachse (VA) und/oder der Hinterachse (HA), wobei die Primärsteuereinheit (M-ECU) drahtlos und/oder drahtgebunden kommunikativ mit dem Fahrzeugelektromotor (TM1, TM2) verbunden ist, um diesen zur Erzeugung eines Bremsmoments anzusteuern.
18. Fahrzeug nach Aspekt 16,
   **dadurch gekennzeichnet**, dass
   an zumindest zwei der Radbremsen (RB1-RB4) elastische Elemente, insbesondere Federelemente und/oder Rollbackdichtungen, für eine Belagrückführung der Radbremsen (RB1-RB4) vorgesehen sind, wobei das elastische Element so wirkt, dass sich ein Lüftspiel einstellt, wobei vorzugsweise die Primärsteuereinheit (M-ECU) bei einem Bremsvorgang mindestens eine der Druckversorgungseinheiten (DV1, DV2) zur Überwindung des Lüftspiels ansteuert und/oder die Primärsteuereinheit (M-ECU) bei einem Bremsvorgang den Fahrzeugelektromotor (TM1, TM2) zur Erzeugung eines Bremsmoments während des Überwindens des Lüftspiels ansteuert.
19. Verfahren zur Steuerung eines Fahrzeugs, insbesondere mit einem Fahrdynamiksystem nach einem der Aspekte 1 bis 14,
   umfassend die Schritte:
   - Ausgeben eines Steuerbefehls, umfassend einen Lenk- und/oder einen Bremsbefehl, durch eine (Master-)Primärsteuereinheit (M-ECU);
   - Empfangen des Steuerbefehls durch mindestens ein (Slave-)Steuergerät (ECUBM1, ECUBM2) eines Bremsmoduls, insbesondere eines ersten oder zweiten Bremsmoduls (BM1, BM2);
   - Überwachen der Fahrzeugsituation durch eine Detektionseinheit;
   - Ausführen des Steuerbefehls durch mindestens einen Aktuator, wenn die Detektionseinheit angibt, dass sich das Fahrzeug in einer Normalsituation befindet; oder
   - Ausführen eines zumindest teilweise modifizierten Steuerbefehls, insbesondere eines ABS/ESP- oder Giermomenteingriffes zum stabilen Abbremsen des Fahrzeuges mit maximaler Verzögerung durch das (Slave-)Steuergerät (ECUBM1, ECUMB2), wenn die Detektionseinheit angibt, dass sich das Fahrzeug in einer Risikosituation befindet.
20. Verfahren nach Aspekt 18,
   **dadurch gekennzeichnet**, dass
   die Detektionseinheit ein drohendes Blockieren von mindestens einem Rad (R1-R4) und/oder ein drohendes Ausbrechen des Fahrzeugs bei einem Lenkversuch und/oder ein drohendes Durchdrehen mindestens eines Rads (R1-R4) als Risikosituation erkennt.
21. Computerlesbares Medium, umfassend Instruktionen zur Durchführung des Verfahrens nach Aspekt 18 oder 20, wenn diese ausgeführt werden.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf. , runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

### Bezugszeichen

- 1: Gaspedal
- BM1: erstes Bremsmodul
- DV1: erste Druckversorgungseinheit bzw. Druckversorgungseinrichtung
- 18: elektromotorischer Antrieb
- ECUBM1: erstes Bremsmodul-Steuergerät (ECU-X-Boost)
- DV3: dritte Druckversorgungseinheit bzw. Druckversorgungseinrichtung
- 21: Schnüffelbohrung der dritten Druckversorgungseinheit
- 22: Hauptbremszylinder
- 22a, 22b: Dichtelement des Hilfskolbens
- 23: Kolbenkammer
- 24: Kolben
- 26: Betätigungselement
- 28: Wegsimulator
- 28a, 28b: Dichtelement des Wegsimulators
- 29: Wegsimulator-Ventil
- 30a, 30b: Pedalwegsensor
- 36: Feder
- 40: Vorratsbehälter
- 42a, 42b: Dichtelemente
- 62: Sensorelement
- 69: Einspeiseventil
- 70b, 70c, 80d, RV1, RV2, NV: Saugventil
- ÜV: Druckbegrenzungsventil
- 74: viertes Trennventil
- BM2: zweites Bremsmodul
- ECUBM2: zweites Bremsmodul-Steuergerät
- DV2: zweite Druckversorgungseinheit bzw. Druckversorgungseinrichtung
- 91: Antrieb/Motor M
- M-ECU: Primärsteuereinheit
- A1, A2: Anschlusspunkt
- B1, B2: Elektrische Anschlüsse (dreiphasig)
- P: Pumpe
- BP1, TV1: erstes Trennventil
- TVBK2, TV2: zweites Trennventil
- BP2: drittes Trennventil
- RB1, RB2, RB3, RB4: Radbremse
- R1, R2, R3, R4: Rad
- DR: Drossel
- BK1: erster Bremskreis
- BK2: zweiter Bremskreis
- HL1: erste Hydraulikleitung
- HL2: zweite Hydraulikleitung
- HL3: dritte Hydraulikleitung
- HL4: vierte Hydraulikleitung
- L6: Längsachse der ersten Druckversorgungseinheit
- L14: Längsachse der zweiten Druckversorgungseinheit
- VA: Vorderachse
- HA: Hinterachse
- TM1: Fahrzeugelektromotor
- TM2: Fahrzeugelektromotor
- RVHZ: Rückschlagventil
- CAN: CAN-Bus
- ST: Stecker
- NS: Schwimmer
- NST: Niveausensor
- HSV1, HSV2, USV1, USV2: Ventile der ESP-Einheit
- AV1, AV2, AV3, AV4: Auslassventil
- EV1, EV2, EV3, EV4: Einlassventil
- SV1, SV2, SV3, SV4: bidirektionale Schaltventile
- ZAV: zentrales Auslassventil
- SpK: Speicherkammer
- C: Lenksignal (Lenksollwert)
- D: Antriebssignal (Antriebssollwert)
- S1, S4: Signale
- EPS: Servolenkung
- FDS: Fahrdynamiksystem
- P1, P2: Bordnetz
- M-ECUAD: AD-Steuereinheit

## Patentansprüche

1. Fahrdynamiksystem für ein Fahrzeug, umfassend:
- eine Primärsteuereinheit (M-ECU) zur Erfassung und/oder Generierung von Lenkbefehlen und Bremsbefehlen;
- ein Bremssystem
mit einem ersten Bremsmodul (BM1), umfassend eine erste elektrohydraulische Druckversorgungseinheit (DV1) und
mit einem zweiten Bremsmodul (BM2), umfassend eine zweite elektrohydraulische Druckversorgungseinheit (DV2);
- vier hydraulisch betätigbare Radbremsen (RB1-RB4), die Rädern (R1- R4) zugeordnet sind;
- elektrisch betätigbare Bremsdruckeinstellventile (EV1-EV4, AV1-AV4, SV1-SV4);
- ein Lenkaktuator (EPS) zur Betätigung mindestens einer Achse;
- mindestens eine Busverbindung zur kommunikativen Verbindung eines Steuergeräts (ECUBM1) des ersten Bremsmoduls (BM1) mit der Primärsteuereinheit (M-ECU);
wobei das erste Bremsmodul (BM1) und das zweite Bremsmodul (BM2) in gesonderten Gehäusen untergebracht sind,
wobei das Fahrdynamiksystem dazu ausgebildet ist,
zur Umsetzung eines Bremsbefehls im Normalbetrieb mindestens die zweite Druckversorgungseinheit (DV2) und zumindest die Bremsdruckeinstellventile (EV1-EV4, AV1-AV4, SV1-SV4) für eine radindividuelle Druckeinstellung und
in einem ersten Fehlerfall mindestens die erste Druckversorgungseinheit (DV1) und zumindest die Bremsdruckeinstellventile (EV1-EV4, AV1-AV4, SV1-SV4) für eine radindividuelle Druckeinstellung anzusteuern, wobei die Primärsteuereinheit (M-ECU) dazu ausgebildet ist, Steuerbefehle an das Bremssystem zu schicken, die durch das erste Bremsmodul BM1 (Primarfunktion) und das zweite Bremsmodul BM2 (Sekundarfunktion) ausgeführt werden, wobei die Steuerbefehle Angaben über Solldrücke oder Solldruckverläufe umfassen.

2. Fahrdynamiksystem nach Anspruch 1,
**dadurch gekennzeichnet, dass**
eine Detektionseinheit zur Detektion mindestens des ersten Fehlerfalls, insbesondere eines zumindest teilweisen Ausfalls eines zweiten Bremsmoduls (BM2), insbesondere der zweiten Druckversorgungseinheit (DV2), und/oder des Lenkaktuators (EPS), wobei das Fahrdynamiksystem dazu ausgebildet ist, im ersten Fehlerfall zur Bereitstellung eines Giermomenteingriffs und/oder einer Lenkunterstützung mittels der ersten Druckversorgungseinheit (DV1) einen Druck in mindestens einer Radbremse (RB1, RB2, RB3, RB4) aufzubauen.

3. Fahrdynamiksystem nach einem der vorhergehenden Ansprüche,
**dadurch gekennzeichnet, dass**
eine/die Detektionseinheit zur Detektion mindestens eines zweiten Fehlerfalls, insbesondere des zumindest teilweisen Ausfalls des Lenkaktuators (EPS) ausgebildet ist, wobei im zweiten Fehlerfall ein Lenkbefehl unter Verwendung der zweiten Druckversorgungseinheit (DV2), insbesondere durch ein Aufbauen eines Drucks in den Radbremsen (RB1, RB2, RB3, RB4) auf einer Seite des Fahrzeugs, umgesetzt wird.

4. Fahrdynamiksystem nach einem der vorhergehenden Ansprüche, insbesondere nach Anspruch 3,
**dadurch gekennzeichnet, dass**
ein/das erste Bremsmodul (BM1) mit der ersten Druckversorgungseinheit (DV1) dazu eingerichtet ist, zumindest einen ersten Bremskreis (BK1) über einen ersten Anschlusspunkt (A1) und zumindest einen zweiten Bremskreis (BK2) über einen zweiten Anschlusspunkt (A2) mit einem Druckmittel zu beaufschlagen, wobei
- ein erstes Trennventil (BP1) des ersten Bremsmoduls (BM1) in einer ersten Hydraulikleitung (HL1) zwischen der ersten Druckversorgungseinheit (DV1) des ersten Bremsmoduls (BM1) und dem ersten Anschlusspunkt (A1) angeordnet ist und ein zweites Trennventil (TVBK2) in einer zweiten Hydraulikleitung (HL2) zwischen der ersten Druckversorgungseinheit (DV1) und dem zweiten Anschlusspunkt (A2) angeordnet ist,
wobei das Bremssystem dazu ausgebildet ist,
- einen dritten Fehlerfall, insbesondere einen Totalausfall eines/des zweiten Bremsmoduls (BM2) mit der zweiten Druckversorgungseinheit (DV2), zu detektieren,
- im dritten Fehlerfall, die erste Druckversorgungseinheit (DV1) und das erste und zweite Trennventil (BP1, TVBK2) zu steuern, um zumindest eine bremskreisindividuelle Druckregelung in den zumindest zwei Bremskreisen (BK1, BK2) zu implementieren.

5. Fahrdynamiksystem nach einem der vorhergehenden Ansprüche,
**dadurch gekennzeichnet, dass**
jeder Radbremse (RB1 - RB4) (genau) ein insbesondere bidirektionales Bremsdruckeinstellventil (SV1 bis SV4) für einen Druckaufbau und einen Druckabbau in der jeweiligen Radbremse (RB1 - RB4) zugeordnet ist.

6. Fahrdynamiksystem nach einem der vorhergehenden Ansprüche,
**dadurch gekennzeichnet, dass**
die zweite Druckversorgungseinheit (DV2) eine Einkreis-Pumpe umfasst, die hydraulisch mit einem/dem Vorratsbehälter (40) verbunden ist, um Druckmittel in den ersten und/oder zweiten Bremskreis (BK1, BK2) zu fördern.

7. Fahrdynamiksystem nach einem der vorhergehenden Ansprüche,
**dadurch gekennzeichnet, dass**
eine/die Detektionseinrichtung zur Detektion eines vierten Fehlerfalls, insbesondere des Ausfalls eines Bremskreises (BK1, BK2), und/oder eines fünften Fehlerfalls, insbesondere des Ausfalls einer Radbremse (RB1 - RB4), wobei das Fahrdynamiksystem dazu ausgebildet ist, in Reaktion auf die Detektion des vierten und/oder des fünften Fehlerfalls mindestens eines der Trennventile (BP1, TVBK2) und/oder mindestens eines der Bremsdruckeinstellventile (EV1-EV4, AV1-AV4, SV1-SV4) zu schließen, um den ausgefallenen Bremskreis und/oder die ausgefallene Radbremse (RB1-RB4) hydraulisch abzukuppeln.

8. Fahrdynamiksystem nach einem der vorhergehenden Ansprüche,
**dadurch gekennzeichnet, dass**
der Lenkaktuator (EPS) mindestens einen elektromotorischen Antrieb mit redundanten Wicklungen und redundanter Steuerung umfasst, sodass bei einem Ausfall die Funktionalität des Lenkaktuators (EPS) zumindest teilweise mittels der redundanten Wicklungen und Steuerung aufrechterhaltbar ist und/oder
die erste und/oder zweite Druckversorgungseinheit (DV1, DV2) mindestens einen elektromotorischen Antrieb (18) mit redundanten Wicklungen und redundanter Steuerung umfasst, sodass bei einem Ausfall ein Druckaufbau und/oder Druckabbau in den Radbremsen (RB1 -RB4) zumindest teilweise mittels der redundanten Wicklungen und Steuerung umsetzbar ist.

9. Fahrdynamiksystem nach einem der vorhergehenden Ansprüche,
**dadurch gekennzeichnet, dass**
in einem (detektierten) sechsten Fehlerfall, insbesondere während eines zumindest teilweisen Ausfalls der ersten Druckversorgungseinheit (DV1) oder zweiten Druckversorgungseinheit (DV2), die jeweils andere Druckversorgungseinheit (DV1, DV2) Druck aufbaut und/oder mindestens einen der Fahrzeugelektromotoren (TM1, TM2) aktiviert, um die Stillstandsbremsung zu implementieren.

10. Fahrdynamiksystem nach einem der vorhergehenden Ansprüche,
**dadurch gekennzeichnet, dass**
bei einer Detektion eines zumindest teilweisen Ausfalls der zweiten Druckversorgungseinheit (DV2) das Fahrdynamiksystem dazu eingerichtet ist, eine ABS-Funktion und/oder einen Giermomenteingriff bereitzustellen, wobei ein (radindividuelles und/oder selektives) Einstellen der Drücke in den Radbremsen (RB1, RB2, RB3, RB4) unter Ansteuerung mindestens eines der Bremsdruckeinstellventile (AV1-AV4, EV1-EV4, SV1-SV4) und/oder eines Trennventiles (USV1, USV2, HSV1, HSV2) des zweiten Bremsmoduls (BM2) und der ersten Druckversorgungseinheit (DV1) erfolgt.

11. Fahrdynamiksystem nach einem der vorhergehenden Ansprüche,
**dadurch gekennzeichnet, dass**
das Fahrdynamiksystem dazu ausgebildet ist, für einen Druckabbau in mindestens einer der Radbremsen (RB1-RB4) eine der Druckversorgungseinheiten (DV1, DV2), insbesondere die erste Druckversorgungseinheit (DV1), anzusteuern, wobei vorzugsweise eine Ansteuerung derart erfolgt, dass ein Kolben der Druckversorgungseinheit (DV1) zurückgefahren wird.

12. Fahrdynamiksystem nach einem der vorhergehenden Ansprüche,
**gekennzeichnet durch**:
- mindestens eine (kabelgebundene) Busverbindung zur kommunikativen Verbindung des Lenkaktuators (EPS), insbesondere eines Steuergeräts des Lenkaktuators (EPS), mit der Primärsteuereinheit (M-ECU); und/oder
- Sendeempfangseinheiten zur drahtlosen Kommunikationsverbindung des ersten Bremsmoduls (BM1), insbesondere des Steuergeräts (ECUBM1) des ersten Bremsmoduls (BM1), und/oder des Lenkaktuators (EPS), insbesondere des Steuergeräts des Lenkaktuators (EPS), mit der Primärsteuereinheit (M-ECU).

13. Fahrzeug, umfassend ein Fahrdynamiksystem nach einem der vorhergehenden Ansprüche.

14. Fahrzeug nach Anspruch 13,
umfassend:
- eine Vorderachse (VA);
- eine Hinterachse (HA), wobei Räder (R1, R2, R3, R4) an der Vorderachse (VA) und/oder an der Hinterachse (HA) über die Radbremsen (RB1, RB2, RB3, RB4) abbremsbar sind;
- mindestens einen Fahrzeugelektromotor (TM1, TM2) zum Antreiben der Vorderachse (VA) und/oder der Hinterachse (HA), wobei die Primärsteuereinheit (M-ECU) drahtlos und/oder drahtgebunden kommunikativ mit dem Fahrzeugelektromotor (TM1, TM2) verbunden ist, um diesen zur Erzeugung eines Bremsmoments anzusteuern.

15. Verfahren zur Steuerung eines Fahrzeugs, insbesondere mit einem Fahrdynamiksystem nach einem der Ansprüche 1 bis 12, umfassend die Schritte:
- Ausgeben eines Steuerbefehls, umfassend einen Lenk- und/oder einen Bremsbefehl, durch eine (Master-)Primärsteuereinheit (M-ECU);
- Empfangen des Steuerbefehls durch mindestens ein (Slave-)Steuergerät (ECUBM1, ECUBM2) eines Bremsmoduls, insbesondere eines ersten oder zweiten Bremsmoduls (BM1, BM2);
- Überwachen der Fahrzeugsituation durch eine Detektionseinheit;
- Ausführen des Steuerbefehls durch mindestens einen Aktuator, wenn die Detektionseinheit angibt, dass sich das Fahrzeug in einer Normalsituation befindet; oder
- Ausführen eines zumindest teilweise modifizierten Steuerbefehls, insbesondere eines ABS/ESP- oder Giermomenteingriffes zum stabilen Abbremsen des Fahrzeuges mit maximaler Verzögerung durch das (Slave-)Steuergerät (ECUBM1, ECUMB2), wenn die Detektionseinheit angibt, dass sich das Fahrzeug in einer Risikosituation befindet.

16. Verfahren nach Anspruch 15,
**dadurch gekennzeichnet, dass**
die Detektionseinheit ein drohendes Blockieren von mindestens einem Rad (R1-R4) und/oder ein drohendes Ausbrechen des Fahrzeugs bei einem Lenkversuch und/oder ein drohendes Durchdrehen mindestens eines Rads (R1-R4) als Risikosituation erkennt.

17. Computerlesbares Medium, umfassend Instruktionen zur Durchführung des Verfahrens nach Anspruch 15 oder 16, wenn diese ausgeführt werden.
